(19) Europäisches Patentamt
European Patent Office
Office européen des brevets

(11) **EP 4 149 045 A1**

(12) **EUROPEAN PATENT APPLICATION**
published in accordance with Art. 153(4) EPC

(43) Date of publication:
**15.03.2023 Bulletin 2023/11**

(21) Application number: **21826346.5**

(22) Date of filing: **15.06.2021**

(51) International Patent Classification (IPC):
**H04L 9/00** (2006.01)

(52) Cooperative Patent Classification (CPC):
**H04L 9/00**

(86) International application number:
**PCT/KR2021/007517**

(87) International publication number:
**WO 2021/256843 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.06.2020 US 202063039086 P**

(71) Applicant: CRYPTO LAB INC.
**Gwanak-gu, Seoul 08826 (KR)**

(72) Inventors:
• **CHEON, Jung Hee**
  **Seoul 08826 (KR)**
• **LEE, Younho**
  **Seoul 05507 (KR)**
• **NAM, Yujin**
  **Seoul 08731 (KR)**
• **KIM, Seungji**
  **Seoul 08298 (KR)**

(74) Representative: **Patentwerk B.V.**
**P.O. Box 1514**
**5200 BN 's-Hertogenbosch (NL)**

(54) **DEVICE AND METHOD FOR PERFORMING STATISTICAL CALCULATION ON HOMOMORPHIC CIPHERTEXT**

(57) An electronic device is disclosed. The electronic device includes a memory configured to store at least one instruction, and store homomorphic ciphertexts storing a plurality of variable data in an encrypted state in plurality, and a processor configured to execute at least one instruction, and the processor is configured to generate, by executing the at least one instruction, number data corresponding to a variable combination by using a bin mask having different variable data classified for each of the homomorphic ciphertexts based on an operation instruction on the plurality of homomorphic ciphertexts being received.

FIG. 3

EP 4 149 045 A1

**Description**

[Technical Field]

The disclosure relates to a device performing statistical operation on a homomorphic ciphertext and a method thereof. More particularly, the disclosure relates to an electronic device capable of effectively performing statistical operation on a homomorphic ciphertext and a method thereof.

[Background Art]

With the development of electronic and communication technology, a variety of services are being supported by utilizing data which is transmitted and received between various services. Among the examples therefrom, a user may keep one's private information or the like stored in a server, and actively use cloud computing services which uses the information in the server.

In this environment, use of security technology is essential for preventing data leakage. Accordingly, the server is configured to store encrypted data. In this case, because the server is configured to decrypt encrypted data each time when searching stored data or performing a series work based on the data, waste in resource and time may occur.

In addition, when a third-party hacking occurs while in a temporarily decrypted state for a operation in the server, there is the problem of private information being easily leaked to the third-party.

In order to solve the above-described problems and disadvantages, a homomorphic encryption method is being researched. By using a homomorphic encryption scheme, even if an operation is performed in a ciphertext itself without decrypting encrypted information, a same result as with the encrypted value after operation on a plaintext is performed may be obtained. Accordingly, various operations may be performed on the ciphertext without performing any decryption.

However, processing time is slower than a plaintext operation scheme of the related art in that operation in a homomorphic ciphertext state requires more operational volume than the operation in the plaintext state. Specifically, the statistical operation on data requires a method which may more effectively perform a statistical operation on a homomorphic ciphertext in that much operational volume is required even when in the plaintext state.

[Disclosure]

[Technical Problem]

Aspects of the disclosure are to address at least the above-mentioned problems and/or disadvantages and to provide at least the advantages described below. Accordingly, an aspect of the disclosure is to provide an electronic device capable of effectively performing a statistical operation on a homomorphic ciphertext and a method thereof.

[Technical Solution]

According to an example embodiment, an electronic device includes a memory configured to store at least one instruction, and store homomorphic ciphertexts storing a plurality of variable data in an encrypted state in plurality, and a processor configured to execute at least one instruction, and the processor is configured to generate, by executing the at least one instruction, number data corresponding to a variable combination by using a bin mask having different variable data classified for each of the homomorphic ciphertexts based on an operation instruction on the plurality of homomorphic ciphertexts being received.

The homomorphic ciphertext may include a plurality of slots, and each of the plurality of slots may include one variable data.

The bin mask may include a plurality of slots, and each of the plurality of slots may include data on whether one variable value is present, and the processor may be configured to generate a plurality of bin masks for each variable data included in the homomorphic ciphertext with respect to each of the homomorphic ciphertexts, select a bin mask corresponding to the variable combination from among the plurality of generated bin masks, and generate number data with the variable combination by using multiplication between the selected bin masks.

The bin mask may include a plurality of slots, and each of the plurality of slots may include a plurality of sub slots including data on whether one variable value is present, and the processor may be configured to generate one bin mask on each of the homomorphic ciphertexts, and generate number data with the variable combination by using sub slots in the bin mask which correspond to the variable combination from among the plurality of bin masks.

The plurality of sub slots may be configured to be disposed in one slot with a preset bit distance.

The processor may be configured to join a first homomorphic ciphertext and a second homomorphic ciphertext including a plurality of data on a same feature to one homomorphic ciphertext.

The processor may be configured to use a first position data in the first homomorphic ciphertext and a second position data in the second homomorphic ciphertext on common data in the first homomorphic ciphertext and the second homomorphic ciphertext to join the first homomorphic ciphertext and the second homomorphic ciphertext as one.

The processor may be configured to compare, based on data encrypted with a one direction encryption scheme using a preset common key with respect to each of the plurality of data comprised in the first and second homomorphic ciphertexts and position data in a homomorphic ciphertext on the encrypted data being input, encrypted data on the first homomorphic ciphertext with encrypted data on the second homomorphic ciphertext, and check the first position data and the second position data which include common data between the two homomorphic ciphertexts.

According to an example embodiment, a method of processing ciphertext on a homomorphic ciphertext includes storing homomorphic ciphertexts, which stores a plurality of variable data in an encrypted state, in plurality, and receiving an operation instruction on the plurality of homomorphic ciphertexts, generating a bin mask having different variable data classified for each of the plurality of homomorphic ciphertexts, generating number data corresponding to a variable combination by using the bin mask, and outputting the generated number data.

The homomorphic ciphertext may include a plurality of slots, and each of the plurality of slots may include one variable data.

The bin mask may include a plurality of slots, and each of the plurality of slots may include data on whether one variable value is present, and the generating the bin mask may include generating a plurality of bin masks for each variable data included in the homomorphic ciphertext with respect to each homomorphic ciphertext, and the the generating number data may include selecting a bin mask corresponding to the variable combination from among the plurality of generated bin masks, and using multiplication between the selected bin masks to generate number data with the variable combination.

The bin mask may include a plurality of slots, and each of the plurality of slots may include a plurality of sub slots including data on whether one variable value is present, the generating the bin mask may include generating one bin mask with respect to each of the homomorphic ciphertexts, and the generating number data may include using sub slots in the bin mask corresponding to the variable combination from among the plurality of bin masks to generate number data with the variable combination.

The plurality of sub slots may be configured to be disposed in one slot with a preset bit distance.

The encryption processing method may further include joining a first homomorphic ciphertext and a second homomorphic ciphertext including a plurality of data on a same feature to one homomorphic ciphertext.

The joining may include using a first position data in the first homomorphic ciphertext and a second position data in the second homomorphic ciphertext on common data in the first homomorphic ciphertext and the second homomorphic ciphertext, and joining the first homomorphic ciphertext and the second homomorphic ciphertext as one.

The joining may include comparing, based on data encrypted with a one direction encryption scheme using a preset common key with respect to each of the plurality of data included in the first and second homomorphic ciphertexts and position data in a homomorphic ciphertext on the encrypted data being input, encrypted data on the first homomorphic ciphertext with encrypted data on the second homomorphic ciphertext, and checking the first position data and the second position data which include common data between the two homomorphic ciphertexts.

According to an example embodiment, a computer readable recording medium including a program for executing a ciphertext processing method includes storing homomorphic ciphertexts, which stores a plurality of variable data in an encrypted state, in plurality, and receiving an operation instruction on the plurality of homomorphic ciphertexts, generating a bin mask having different variable data classified for each of the plurality of homomorphic ciphertexts, generating number data corresponding to a variable combination by using the bin mask, and outputting the generated number data.

[Effect of Invention]

According to various example embodiments of the disclosure as described above, various statistical processing is possible by using a homomorphic ciphertext, and statistical processing is possible by merging with respect to a homomorphic ciphertext having data structures of different schemes.

[Description of Drawings]

FIG. 1 is a diagram illustrating a structure of a network system according to an embodiment of the disclosure;
FIG. 2 is a block diagram illustrating a brief configuration of an electronic device according to an embodiment of the disclosure;
FIGS. 3 and 4 are diagrams illustrating a bin count operation method according to an embodiment of the disclosure;

FIGS. 5 and 6 are diagrams illustrating an operation of an expanded bin count operation according to an embodiment of the disclosure;

FIG. 7 is a diagram illustrating a joining method on a plurality of encryption tables;

FIG. 8 is a diagram illustrating a statistic calculation method using a bin mask according to an embodiment of the disclosure;

FIGS. 9 and 10 are diagrams illustrating a process of generating a bin mask using plaintext according to an embodiment of the disclosure;

FIG. 11 is a diagram illustrating an approximation algorithm according to an embodiment of the disclosure;

FIG. 12 is a diagram illustrating a bin mask generating operation using a homomorphic ciphertext according to an embodiment of the disclosure;

FIG. 13 is a diagram illustrating an operation of a bin count operation according to an embodiment of the disclosure;

FIG. 14 is a diagram illustrating original data and a target of a large bin count operation according to an embodiment of the disclosure;

FIG. 15 is a diagram illustrating a method of calculating a number of a specific number of cases by using a bin mask;

FIG. 16 is a diagram illustrating an operation of a bin count operation using a power bin mask according to an embodiment of the disclosure;

FIG. 17 is a diagram illustrating a bin count operation considering an error term according to an embodiment of the disclosure;

FIG. 18 is a diagram illustrating a generation operation of a power bin mask according to an embodiment of the disclosure;

FIG. 19 is a diagram illustrating a generation operation of a power bin mask according to another embodiment of the disclosure;

FIG. 20 is a diagram illustrating an operation of multiplication operation between a plurality of bin masks according to an embodiment of the disclosure;

FIG. 21 is a diagram illustrating an operation of multiplication operation using a plurality of GPUs;

FIG. 22 is a diagram illustrating a decryption operation after multiplication operation according to an embodiment of the disclosure;

FIG. 23 is a diagram illustrating a data structure of a bin mask according to an embodiment of the disclosure;

FIG. 24 is a diagram illustrating a data structure of a multiplication operation result according to an embodiment of the disclosure;

FIG. 25 is a diagram illustrating a comparison operation according to the disclosure;

FIGS. 26 to 28 are diagrams illustrating various statistic calculation methods according to an embodiment of the disclosure;

FIG. 29 is a diagram illustrating an operation of calculating a maximum value in a slot according to the disclosure;

FIG. 30 is a diagram illustrating an operation of calculating a maximum value in several columns in a plurality of blocks;

FIG. 31 is a diagram illustrating a method of calculating a value of a specific order according to an embodiment of the disclosure; and

FIG. 32 is a flowchart illustrating a ciphertext processing method according to an embodiment of the disclosure.

[Best Mode]

[0027]   -

[Detailed Description of Exemplary Embodiments]

The disclosure will be described in detail below with reference to accompanying drawings. A data transmitting process performed in the disclosure may be applied with encryption/decryption if necessary, and all expressions describing the data transmitting process in the disclosure and in the claims should be interpreted to include encryption/decryption even if it is not specific mentioned. Expressions in forms such as "transmit (transfer) from A to B" or "receive A from B" in the disclosure may include transmitting (transferring) or receiving with another medium included therebetween, and not necessarily describe transmitting (transferring) or receiving directly from A to B only.

In describing the disclosure, an order of each step is to be understood as non-limiting unless the order of each step needs to be performed such that a preceding step must be performed logically and temporally prior to a following step. That is, except for exceptional cases as described above, even if a process described as the following step is performed preceding a process described as the preceding step, it does not influence the nature of the disclosure and the scope of protection should also be defined regardless of the order of the step. Further, in the disclosure, expressions such as "A or B" not only refers to any one of A and B selectively, but also may be defined as including both A and B. In addition, the term "include" may have a comprehensive meaning as further including another element in addition to the elements listed as included.

In the disclosure, only the essential elements necessary in describing the disclosure have been described, and elements not related to the nature of the disclosure have been omitted. Further, the disclosure is not to be construed in an exclusive sense including only the recited elements, but to be interpreted in a nonexclusive sense where other elements may be included.

Further, in the disclosure, the term "value" may be defined as not only including a scalar value, but also a vector and a polynomial form.

Mathematical operations and calculations of each step in the disclosure described below may be realized with computer operations by a coding method known for performing a relevant operation or calculation and/or coding appropriately designed in the disclosure.

Specific equations described below are described as an example from among several possible alternatives, and the scope of protection of the disclosure should not be interpreted as being limited by the recited equations.

For convenience of description, notations such as the following will be used disclosure.

$a \leftarrow D$: select element a according to distribution D

$s1, s2 \in R$: each of S1, S2 is an element belonging to a set R

$mod(q)$: compute modular with element q

$\lfloor - \rceil$ : round-off an internal value

The various example embodiments of the disclosure will be described in detail below using the accompanying drawings.

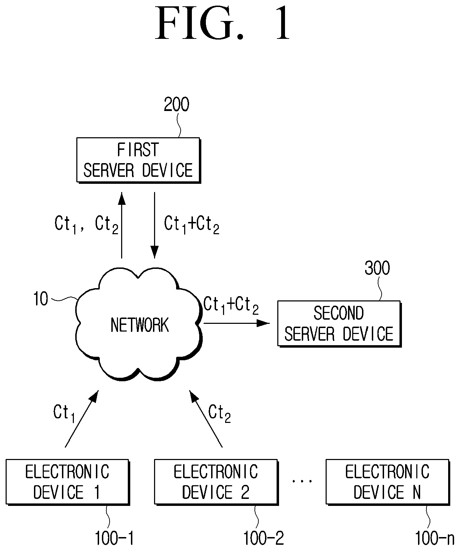

FIG. 1 is a diagram illustrating a structure of a network system according to an embodiment of the disclosure.

Referring to FIG. 1, the network system may include a plurality of electronic devices 100-1 to 100-n, a first server device 200, and a second sever device 300, and each configuration may be interconnected through a network 10.

The network 10 may be realized through a wired/wireless communication network, a broadcast communication network, an optical communication network, a cloud network, or the like of various forms, and each device may be connected in methods such as a Wi-Fi, a Bluetooth, a near field communication (NFC), or the like without a separate medium.

In FIG. 1, the electronic device has been illustrated as being in plurality 100-1 to 100-n, but the electronic devices may not necessarily be used in plurality, and one device may be used. In an example, the electronic devices 100-1 to 100-n may be realized to devices of various forms such as a smartphone, a tablet, a game player, a personal computer (PC), a laptop PC, a home server, a kiosk, and the like, and in addition thereto, may be realized in the form of a home appliance applied with an Internet of Things (IoT) function.

The user may input various data through the electronic devices 100-1 to 100-n used by oneself. The input data may be stored in the electronic devices 100-1 to 100-n itself, but may be transmitted to an external device for reasons such as storage capacity and security and stored. In FIG. 1, the first server device 200 may perform the role of storing such data, and the second server device 300 may perform the role of using a portion or all of the data stored in the first server device 200.

Each of the electronic devices 100-1 to 100-n may homomorphically encrypt the input data, and transmit a homomorphic ciphertext to the first server device 200.

Each electronic device 100-1 to 100-n may include encrypted noise, which is calculated in the process of performing homomorphic encryption, that is, an error in the ciphertext. For example, the homomorphic ciphertext generated in each of the electronic devices 100-1 to 100-n may be generated in a form in which a result value, which includes a message and an error value when decrypting using a secret key thereafter, is stored.

In an example, the homomorphic ciphertext generated in the electronic devices 100-1 to 100-n may be generated in a form satisfying the following property when decrypting using a secret key.

$$[\text{Equation 1}]$$

$$Dec(ct, sk) = \langle ct, sk \rangle = M + e(mod\ q)$$

Here, < and > represent a usual inner product, ct represents a ciphertext, sk represents a secret key, M represents a plaintext message, e represents an encryption error value, and mod q represents a modulus of a ciphertext. q may be selected greater than a result value M where a scaling factor($\Delta$) is multiplied to a message. If an absolute value of error value e is sufficiently small compared to M, a decryption value M+e of the ciphertext may be a value which may substitute the original message from the significant figure operation to a same degree of precision. The error from among the decrypted data may be disposed at a least significant bit (LSB) side, and M may be disclosed at a second least significant bit side.

Based on the size of the message being too small or too large, the size may be adjusted by using a scaling factor. If the scaling factor is used, because not only the message in integer form but even the message in error form may be encrypted, utilization may be greatly increased. In addition, by adjusting the size of the message using the scaling factor, an area in which messages are present in the ciphertext after operation is performed, that is, a size of an effective area may be adjusted.

According to an example embodiment, a ciphertext modulus q may be set to various forms and used. In an example, the modulus of the ciphertext may to set to a form of an exponentiation $q=\Delta^L$ of the scaling factor $\Delta$. If $\Delta$ is 2, it may be set to a value such as $q=2^{10}$.

In another example, the ciphertext modulus may be set to a value of which a plurality of different scaling factors are multiplied. Each factor may be set to a value within a similar range, that is, a value of a size similar with one another. For example, it may be set to $q=q_1 q_2 q_3...q_x$, and each of $q_1$, $q_2$, $q_3$ ,...., $q_x$ may be a size similar with scaling factor $\Delta$, and may be set to a value of a small relationship with one another.

If the scaling factor is set in this method, because a whole operation can be carried out by separating into a plurality of modulus operations according to a Chinese Remainder Theorem (CRT), the burden of operation may be reduced.

In addition, by using factors of similar sizes with one another, when performing rounding in a step to be described below, a value nearly similar with the result value of the previous example may be obtained.

The first server device 200 may not decrypt the received homomorphic ciphertext, and store in the ciphertext state.

The second server device 300 may be configured to request a specific processing result on the homomorphic ciphertext to the first server device 200. The first server device 200 may be configured to transmit, after performing a specific operation according to a request of the second sever device 300, the result to the second sever device 300. Here, the specific operation may not only be general operations such as performing addition on a plurality of homomorphic ciphertexts and homomorphic multiplications, but also operations such as a statistical operation, for example, an average, a frequency distribution, a linear regression, a covariance, or the like.

At this time, the second server device 300 may be configured to perform a joining operation on the plurality of homomorphic ciphertexts.

In an example, based on ciphertexts ct, and $ct_2$ transmitted by the two electronic devices 100-1 and 100-2 being stored in the first server device 200, the second server device 300 may be configured to request a value of aggregated data provided from the two electronic devices 100-1 and 100-2 to the first server device 200. The first server device 200 may be configured to transmit, after performing operation of aggregating the two ciphertexts according to the request, the result value $(ct_1 + ct_2)$ to the second sever device 300.

Based on the properties of the homomorphic ciphertext, the first server device 200 may be configured to perform operation in a state not having performed decryption, and the result value thereof may be in ciphertext form. At this time, the first server device 200 may be configured to perform bootstrapping on the operation result.

The first server device 200 may be configured to transmit an operation result ciphertext to the second sever device 300. The second sever device 300 may be configured to decrypt the received operation result ciphertext and obtain the operation result value of data included in each homomorphic ciphertext. Further, the first server device 200 may be configured to perform operation according to a user request numerous times.

In FIG. 1, encryption being performed in the first electronic device and the second electronic device, and the second server device performing decryption have been illustrated, but the embodiment is not limited thereto.

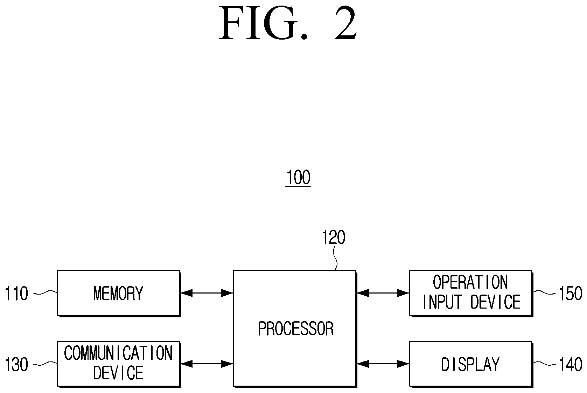

FIG. 2 is a block diagram illustrating a configuration of an electronic device according to an embodiment of the disclosure.

Referring to FIG. 2, the electronic device 100 may include a memory 110, a processor 120, a communication device 130, a display 140, and an operation input device 150. The electronic device described above may be various devices such as a personal computer (PC), a notebook, a smartphone, a tablet, a server, or the like.

The memory 110 may be configured to store at least one instruction on the electronic device 100. For example, the memory 110 may be stored with various programs (or software) for the electronic device 100 to operate according to the various example embodiments of the disclosure.

The memory 110 as described above may be realized to various forms such as a random access memory (RAM) or a read only memory (ROM), a Buffer, a cache, a flash memory, a hard disk drive (HDD), an external memory, a memory card, or the like, and is not limited to any one.

The memory 110 may be configured to store a message to be encrypted. Here, the message may be various credit data, private data, or the like variously cited by the user, and may be data associated with use history, or the like such as position data and internet use time data used in the electronic device 100.

Further, the memory 110 may be configured to store a public key, and store, based on the electronic device 100 generating the public key directly, not only a secret key, but also various parameters required in generating the public key and the secret key.

Further, the memory 110 may be configured to store the homomorphic ciphertext generated in a process described below. Further, the memory 110 may be configured to store the homomorphic ciphertext transmitted from the external device. In addition, the memory 110 may be configured to store the operation result ciphertext which is a result product of an operation process described below.

The communication device 130 may be formed to connect the electronic device 100 with the external device (not shown), and may be formed not only in a form connecting to the external device through a local area network (LAN) and an internet network, but also in a form connecting through a universal serial bus (USB) port or a wireless communication (e.g., WiFi 802.11a/b/g/n, NFC, Bluetooth) port. The communication device 130 may be referred to as a transceiver.

The communication device 130 may be configured to receive the public key from the external device, and transmit the public key generated on its own by the electronic device 100 to the external device.

Further, the communication device 130 may be configured to receive a message from the external device, and transmit the generated homomorphic ciphertext or the operation result to the external device.

In addition, the communication device 130 may be configured to receive various parameters required in generating the ciphertext from the external device. The various parameters upon realization may be received directly from the user through the operation input device 150 which will be described below.

In addition, the communication device 130 may be configured to receive a request of operation on the homomorphic ciphertext from the external device, and transmit the calculated result according thereto to the external device. The requested operation may be operation such as addition, subtraction, and multiplication (e.g., modular multiplication operation), and may be statistical operation. Here, modular multiplication operation may refer to modular operation with a q element.

The display 140 may be configured to display a user interface window for selecting a function supported by the electronic device 100. For example, the display 140 may be configured to display the user interface window for selecting various functions provided by the electronic device 100. The display 140 may be a monitor such as a liquid crystal display (LCD), an organic light emitting diodes (OLED), or the like, and may be realized to a touch screen capable of simultaneously performing a function of the operation input device 150 which will be described below.

The display 140 may be configured to display a message requesting input of a parameter required in generating a secret key or a public key. Further, the display 140 may be configured to display a message having the subject of encryption to select the message. The subject of encryption upon implementation may be selected directly by the user, or selected automatically. That is, private data and the like required in encryption may be set automatically even if the message is not directly selected by the user.

The operation input device 150 may be configured to receive input of a function selection of the electronic device 100 and a control command on a relevant function from the user. For example, the operation input device 150 may be configured to receive a parameter required in generating the secret key and the public key from the user. In addition, the operation input device 150 may be configured to receive, from the user, the setting of the message to be encrypted.

The processor 120 may be configured to control the overall operation of the electronic device 100. For example, processor 120 may be configured to control, by executing at least one instruction stored in the memory 110, the operation of the electronic device 100 overall. The processor 120 may be configured to a single device such as a central processing unit (CPU) and an application-specific integrated circuit (ASIC), or configured to a plurality of configurations such as the CPU and a graphics processing unit (GPU).

When the message to be transmitted is input, the processor 120 may be configured to store in the memory 110. Further, the processor 120 may be configured to use the various setting values and program stored in the memory 110 to homomorphically encrypt the message. In this case, the public key may be used.

The processor 120 may be configured to use a public key required in performing encryption by generating the public key on its own, or may and receive and use from the external device. In an example, the second sever device 300, which performs decryption, may be configured to distribute the public key to other devices.

When generating the key on its own, the processor 120 may be configured to generate the public key by using a Ring-LWE technique. For example, the processor 120 may be configured to first set various parameters and ring, and store in the memory 110. An example of the parameter may be a length of a plaintext message bit, a size of the public key and the secret key, and the like.

The ring may be represented with Equation 2 as below.

[Equation 2]

$$R = \frac{Z_q[X]}{f(x)}$$

Here, R represents the ring, Zq represents a coefficient, f(x) represents an n-th polynomial.

The ring, as a set of polynomials having a predetermined coefficient, may refer to a set of which addition and multiplication between the elements are defined and closed with respect to the addition and multiplication. The ring may be referred to as a ring.

In an example, the ring may refer to a set of an n-th polynomial where the coefficient is Zq. For example, if n is $\Phi(N)$, it may mean an N-th cyclotomic polynomial. (f(x)) may represent an ideal of Zq[x] which is generated as f(x). A Euler totient function $\Phi(N)$ may refer to a number of natural numbers disjoint from N and smaller than N. When $\Phi_N(x)$ is defined as the N-th cyclotomic polynomial, the ring may be represented with Equation 3 as below. Here, $2^{17}$ may be used for N.

[Equation 3]

$$R = \frac{Z_q[X]}{\Phi_N(x)}$$

The secret key (sk) may be represented as below.

The ring of Equation 3 described above may include a complex number in the plaintext space. In order to increase operational speed on the homomorphic ciphertext, only the set of which the plaintext space is a real number from among the above-described set of rings sets may be used.

When the ring as described above is set, the processor 120 may be configured to calculate the secret key (sk) from the ring.

[Equation 4]

$$sk \leftarrow (1, s(x)), s(x) \in R$$

Here, s(x) may refer to a polynomial randomly generated as a small coefficient.

Further, the processor 120 may be configured to calculate a first random polynomial(a(x)) from the ring. The first random polynomial may be represented as below.

[Equation 5]

$$a(x) \leftarrow R$$

In addition, the processor 120 may be configured to calculate an error. For example, the processor 120 may be configured to calculate an error from a discrete Gaussian distribution or a distribution having a close statistical distance therefrom. The error may be represented as below.

[Equation 6]

$$e(x) \leftarrow D^n_{\alpha q}$$

When even the error is calculated, the processor 120 may be configured to perform a modular operation of the error to the first random polynomial and the secret key to calculate a second random polynomial. The second random polynomial may be represented as below.

[Equation 7]

$$b(x) = -a(x)s(x) + e(x) \pmod{q}$$

Finally, the public key (pk) may be set as below in a form which includes the first random polynomial and the second random polynomial.

[Equation 8]

$$pk = (b(x), a(x))$$

Because the above-described key generation method is merely one example, the embodiment is not necessarily limited thereto, and the public key and the secret key may be generated in other methods in addition to the above.

The processor 120 may be configured to control, based on the public key being generated, the communication device 130 to transmit to the other devices.

Further, the processor 120 may be configured to generate the homomorphic ciphertext on the message. For example, the processor 120 may be configured to apply the public key generated previously on the message to generate the homomorphic ciphertext.

The message to be decrypted may be received from an external source, and may be input from an input device directly included in or connected to the electronic device 100. For example, based on the electronic device 100 including a touch screen or a key pad, the processor 120 may be configured to store data input through the touch screen or the keypad by the user in the memory 110, and then encrypt the input data. The generated homomorphic ciphertext may be in a form which is restored to a result value of adding the error to a value which reflects the scaling factor in the message when performing decryption. The scaling factor may use a value, which is previously input and set, as is.

Alternatively, the processor 120 may be configured to perform encryption by using the public key immediately while multiplying the message and the scaling factor. In this case, the error calculated in the encryption process may be added to the result value of multiplying the message and the scaling factor.

In addition, the processor 120 may be configured to generate a length of the ciphertext to correspond to a size of the scaling factor.

Further, the processor 120 may be configured to control, based on the homomorphic ciphertext being generated, the communication device 130 to store in the memory 110, or transmit the homomorphic ciphertext to another device according to a user request or a pre-set default instruction.

According to an example embodiment of the disclosure, packing may be performed. When packing is used in a homomorphic encryption, it may be possible to encrypt multiple messages to one ciphertext. In this case, when an operation is performed between each of the ciphertexts in the electronic device 100, because consequentially operations on multiple messages are processed in parallel, the operational burden is greatly reduced.

For example, the processor 120 may be configured convert, based on the message being formed of a plurality of message vectors, the plurality of message vectors to a polynomial of a form which may be encrypted in parallel, and then perform homomorphic encryption by multiplying the scaling factor to the polynomial and using the public key. Accordingly, the processor 120 may be configured to generate the ciphertext which carried out packing of the plurality of message vectors.

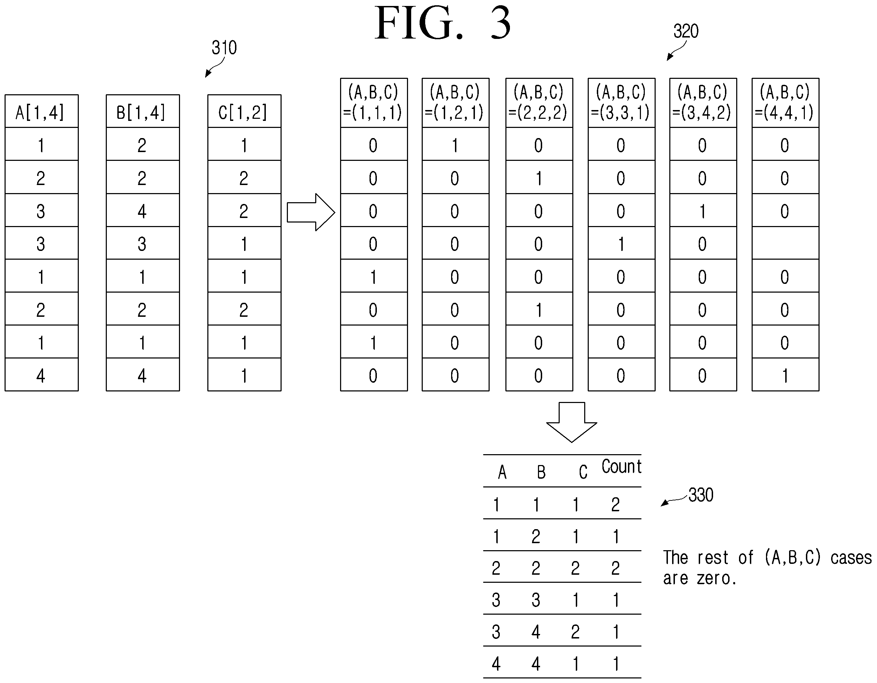

Based on the data stored by the electronic device 100 being a statistical table, the processor 120 may be configured to generate, in the generating process of the homomorphic ciphertext, the homomorphic ciphertext including variable data in a plurality of slots in the ciphertext. In addition, the processor 120 may be configured to generate, in the generating process of the homomorphic ciphertext, a bin mask on the relevant homomorphic ciphertext. The specific bin mask generating operation will be described below with reference to FIG. 3.

Further, the processor 120 may be configured to apply, based on decryption being required on the homomorphic ciphertext, the secret key to the homomorphic ciphertext to generate a decryption text of a polynomial form, and generate a message by decoding the decryption text of the polynomial form. The message generated at this time may include an error as described in Equation 1 described above.

Further, the processor 120 may be configured to perform an operation on the ciphertext. For example, the processor 120 may be configured to not only perform an operation of addition, subtraction, multiplication, or the like while maintaining the encrypted state on the homomorphic ciphertext, but also perform various statistical operations such as an average and frequency distribution on a plurality of data. The specific statistical operation method will be described below with reference to FIG. 3.

The electronic device 100 may be configured to detect, based on the operation being completed, data of an effective area from the operation result data. For example, the electronic device 100 may be configured to perform a rounding process of the operation result data to detect data of the effective area.

Here, the rounding process may mean proceed with a round-off of the message in the encrypted state, and may otherwise be referred to as rescaling. For example, the electronic device 100 may be configured to remove a noise area by multiplying a reciprocal number $\Delta$-1 of the scaling factor to a component of each of the ciphertexts and rounding-off. The noise area may be set to correspond to the size of the scaling factor. Consequentially, a message of an effective area with the noise area excluded may be detected. Because it is proceeded in the encrypted state, additional errors may be generated, but because the size is sufficiently small, it may be disregarded.

Further, in the above-described rounding process, the modular multiplication operation as described above may be used.

In addition, the electronic device 100 may be configured to expand, based on a weight of an approximate message in the operation result ciphertext exceeding a threshold value, the plaintext space of the operation result ciphertext. For example, if q is smaller than M in the above-described Equation 1, because M+e(mod q) is to have a different value from M+e, decryption may not be possible. Accordingly, the value of q is to be maintained greater than M at all times. However, the value of q is gradually decreased as the operation proceeds. The expansion of the plaintext space may refer to changing ciphertext ct to a ciphertext having a greater modulus. The operation of expanding the plaintext space may otherwise be referred to as rebooting. In performing rebooting, the ciphertext may be in a state in which operation is possible once again.

The electronic device 100 according to the disclosure as described above may not only effectively perform an operation on the homomorphic ciphertext, but also on a complex statistical operation. In addition, the electronic device 100 may be configured to manage homomorphic ciphertext provided from multiple devices in one database (DB).

The specific operation of statistical operation on the homomorphic ciphertext will be described below.

First, for an effective statistical operation on the homomorphic ciphertext, the homomorphic ciphertext may be generated to include the data structure as described below.

Described is which method to store table data of the plaintext, that is, multiple record data formed of various features in the homomorphic encryption which provides a Single Instruction Multiple Data (SIMD) function. To this end, data may be gathered for each feature and stored in the ciphertext. That is, one ciphertext may store only data belonging to one feature. Here, this means that one ciphertext may store a plurality of variable values on one feature and not one ciphertext including only one data.

The homomorphic ciphertext may include multiple slots, and each slot may store multiple data. Accordingly, using the above, values on one feature (i.e., same column data in a table) may be stored in each of the multiple slots.

Specifically, table data may be stored and managed in the form as below. For example, if the size of the plaintext table is n and m (here, n is length of data row, and m is length of data column (=number of features)), and the number of data which may include a fully homomorphic ciphertext is M(=$N$/2), the encryption table including the encrypted data may include the description as below.

1. ciphertext

$c_{0,0}, c_{0,1}, \cdots, c_{0,\lceil n/M-1 \rceil}, c_{1,0,\cdots\cdots}, c_{m-1,0}, c_{m-1,1}, \cdots, c_{m-1,\lceil n/M-1 \rceil}$ (here, ciphertext $c_{ij}$ is (j-1)-th ciphertext including i+1-th feature, and the number of ciphertexts is $\lceil n/M \rceil$ for each feature,

2. the number of the total features is m, data column is n,

3. the number of data comprised in other additional metadata (e.g., names of each feature, one ciphertext (also referred to as 1 Block), and table name).

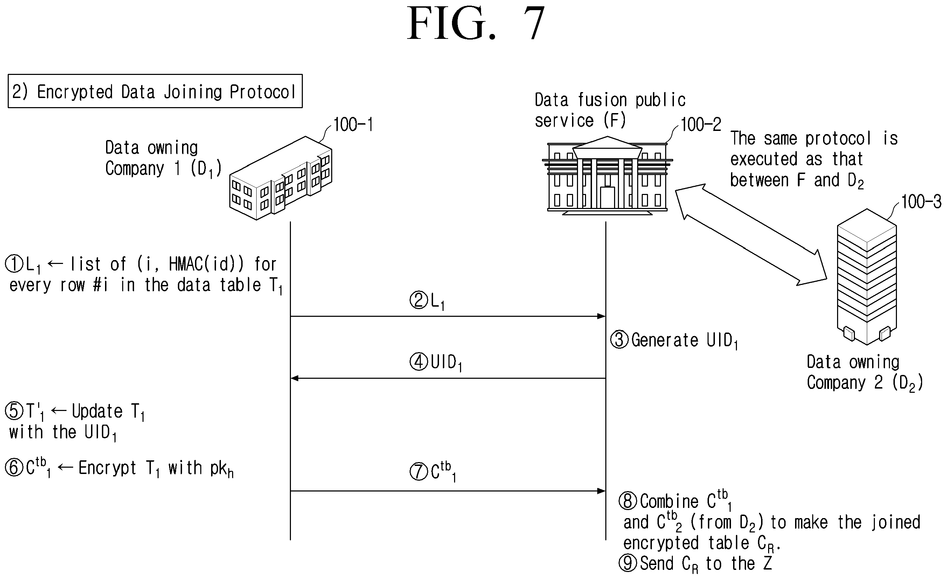

Based on using the method as described above, a more effective calculation may be possible when calculating the statistical value for each floating feature in the encrypted table data. In addition, table joining may be effectively performed without decryption with respect to encryption tables of different methods. The table joining operation will be described below with reference to FIG. 7.

Each homomorphic ciphertext including data on one feature has been assumed below, and an operation on statistical operation with respect to homomorphic ciphertext will be described.

First, the homomorphic ciphertext may perform an operation while in an encrypted state, but because the operation of the encryption process consumes much time, an efficient operation method is required.

In terms of statistical processing, it is first necessary to find a variable which coincides with a specific condition, and find the variable which preferentially coincides with the specific condition in that processing such as an average and dispersion on the found variable are performed.

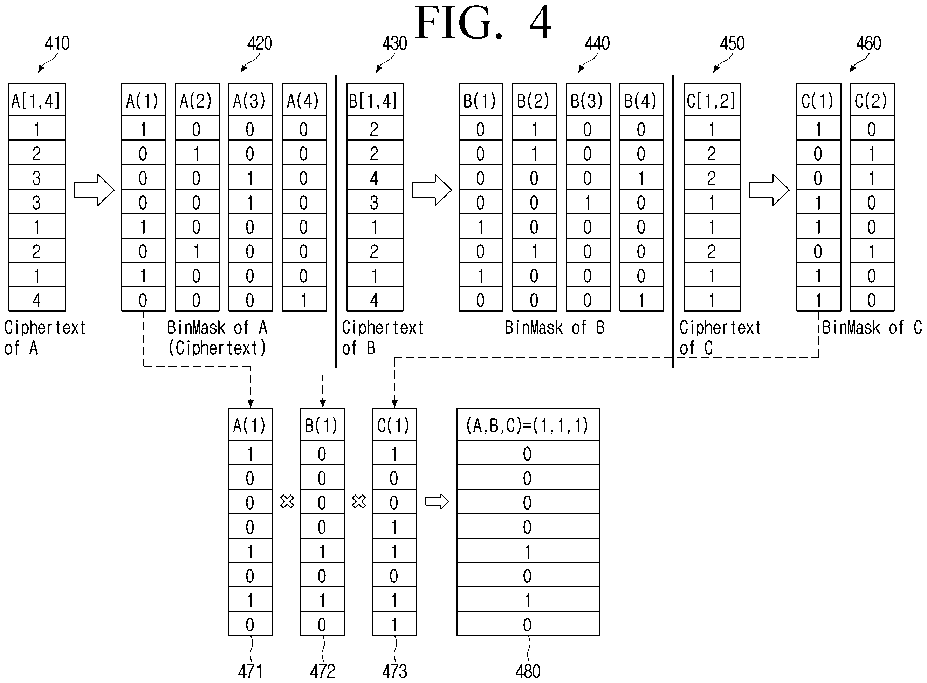

In this aspect, a bin count operation for finding a variable which satisfies the specific condition will be first described below with reference to FIGS. 3 and 4.

FIGS. 3 and 4 are diagrams illustrating a bin count operation method according to an embodiment of the disclosure. Here, the bin count operation may be an operation performing a role of counting the number of possible cases on a combination of each of the variable values in the data by inputting data of two or more bin variables.

Referring to FIG. 3, bin data 310, intermediate data 320, and result data 330 are illustrated. For example, based on bin values in each of the three variables (A, B, C) being {1, 2, 3, 4}(A), {1, 2, 3, 4}(B), {1, 2}(C) respectively in FIG. 3, intermediate data according to the combination of the three variables may be generated.

After generating intermediate data as described above, the result data 330 representing possible combinations of the three variables and a number on the relevant combinations may be generated by using the intermediate data with a count value.

The detailed operation of generating the intermediate data described above will be described below with reference to FIG. 4.

Referring to FIG. 4, first is the process of calculating the bin count when the values of variable A, B, C are each 1.

Each of the variables 410, 420 and 430 may include the plurality of slots. In the illustrated example, although it has been illustrated as having eight slots, slots of more than or less than nine may be included at realization.

A bin mask on each variable value may be generated with respect to each of the variables. For example, in case of variable A 410, because four values are included, a bin mask 420 corresponding to each of the four values may be formed. Further, in case of variable B 430, because four values are included, the bin mask 420 on each of the four values may be formed, and in case of variable C 450, because two values are included, a bin mask 460 on each of the two values may be formed.

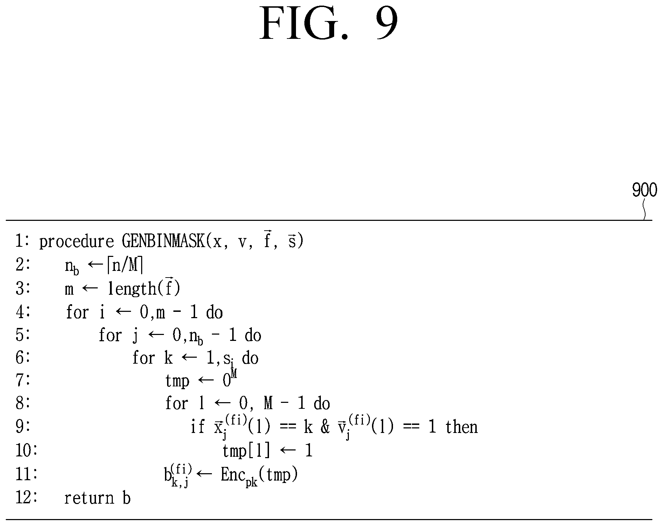

The bin mask as described above may be formed at the time of encryption or may form a bin mask by calculating after being encrypted using a table look-up table function. A more detailed operation of generating the bin mask will be described with reference to FIGS. 9 to 12.

Then, when checking a bin count relevant to a specific combination, the bin mask corresponding to the relevant combination may be selected, and a result may be checked through the multiplication of the selected bin masks. For example, when checking of 1, 1, 1 combination is required, an operation of multiplying a bin mask 471 of value 1 from among the bin masks on variable A 420, a bin mask 472 of value 1 from among the bin masks on variable B 430, and a bin mask 473 of value 1 from among the bin masks on variable C 450 with one another may be performed.

An output mask 480 generated by the operation as described above may include a value of 1 at a position relevant to the relevant combination. Through the above, the position in each variable which form the relevant combination and the number of relevant combinations may be checked.

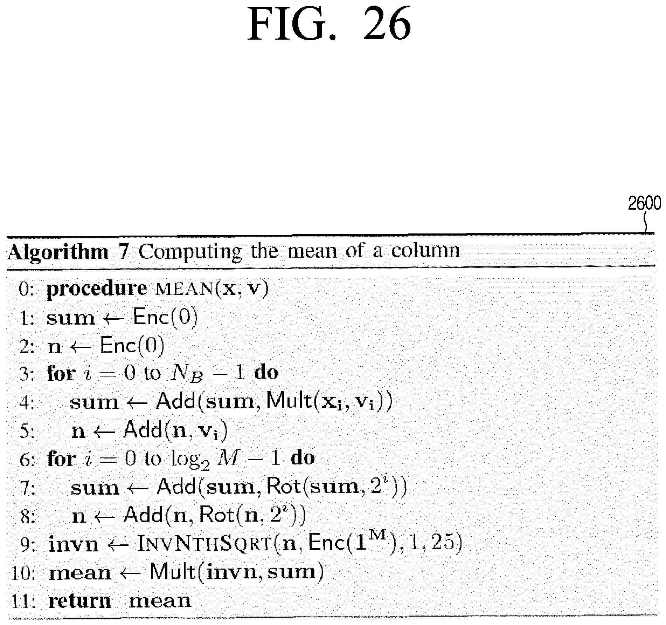

When expanding the operation as described above, a bin average and a bin variance may be calculated. The bin average may be an operation of obtaining an average on another variable of data having the combination of the specific bin variable. Further, the bin variance may be an operation of obtaining a variance on data. A method of performing the relevant operation may include multiplying the bin mask value on the intermediate data 320 in FIG. 3 with a value of another variable of which an average is sought and just by picking only values on rows having the desired combination of bin values, all the values may be added. Then, the bin mask value may be all added, and an average may be obtained by dividing with the latter value from the former value. By utilizing the above-described method, calculation for variance may also be performed. A more detailed operation on the statistical operation will be described with reference to FIGS. 26 to 30.

The bin count described above may be used in the classification process, and may be used in methods such as association rule mining. However, in order to raise accuracy in classification, many number of possible cases in classification is required, and a data analyzer may operate bin count by combining many variables having a greater range in bin value.

Data of various continuous values may be represented as quantile data for convenience of analysis, and as an example, there may be fifty variable values with respect to one.

If there are fifty variable values with respect to one variable, the number of possible cases is significant. When the number of possible cases is significantly increased, if bin count is performed by generating the bin mask for each variable value, the total number of operations may be $(n-1) \times w \times \lfloor u/M \rfloor$ (here, n is the number of variables, w is the number of combinations, M is the number of slots of the ciphertext, and u is the length of a row of whole data).

Here, if w and u are a unit of millions, n is less than or equal to 10, and M is a unit of tens of thousands, when the number of multiplication times required reaches billions, the necessary time required be dozens of days or more time even if the time for performing multiplications is set as several milliseconds.

Accordingly, a modified method of bin count in which types of variables are varied will be described below.

The bin mask below is represents the bin value in an encoded form. For example, when there is data having a range of [1,10] bin value, the bin value may be represented as 10 bytes. If representing bin value i($\in$[1,10]) is desired, a method of setting i-th byte as 1 from among ten bytes and the rest as 0 may be used.

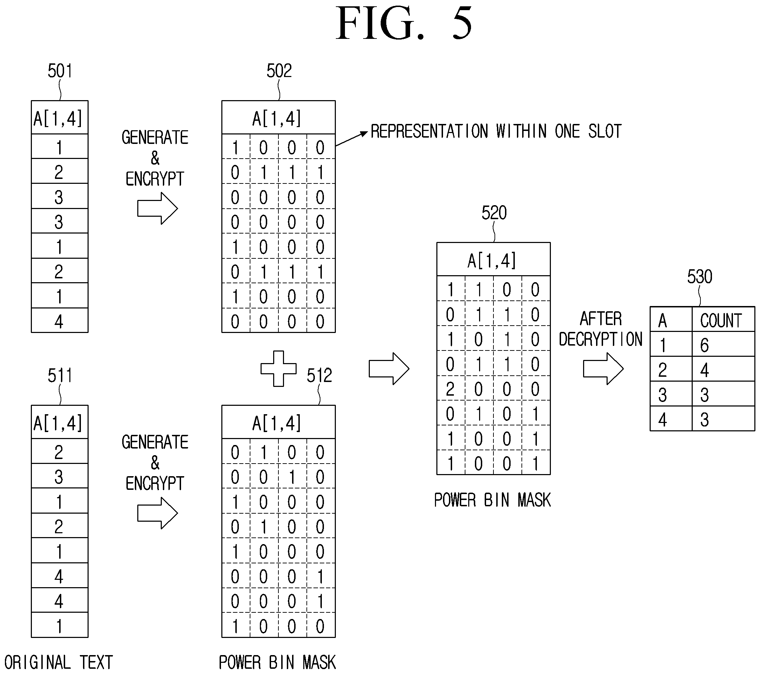

The bin masks set in this method may be added between one another. The above will be described with reference to FIG. 5.

FIG. 5 is a diagram illustrating an operation of expanded bin count operation according to an embodiment of the disclosure.

Referring to FIG. 5, one power bin mask 502 and 512 may include the plurality of slots, and each of the plurality of slots may include a plurality of sub slots. Because a first variable 501 has four different variable values, a first power bin mask 502 may include four sub slots, and each sub slot may include data on whether a specific variable value is present. The generating operation of the power bin mask will be described below.

When utilizing the power bin mask as described above, individual bin masks may have been generated for each variable type in the previous process, but the power bin mask may be satisfied with one for each variable type.

Further, the operation method may be the same as the bin mask method, and if a specific combination is required, output data 520 may be generated by using the sub slot of the power bin mask corresponding to the relevant combination. Then, output data 520 may be decoded, and the value of each combination may be calculated 530.

If the method as shown in FIGS. 3 and 4 is on generating an individual bin mask for each variable value, the method of FIG. 5 is on utilizing the sub slot which divided the slot as in FIGS. 3 and 4, and is in a form totaling the plurality of bin masks to one.

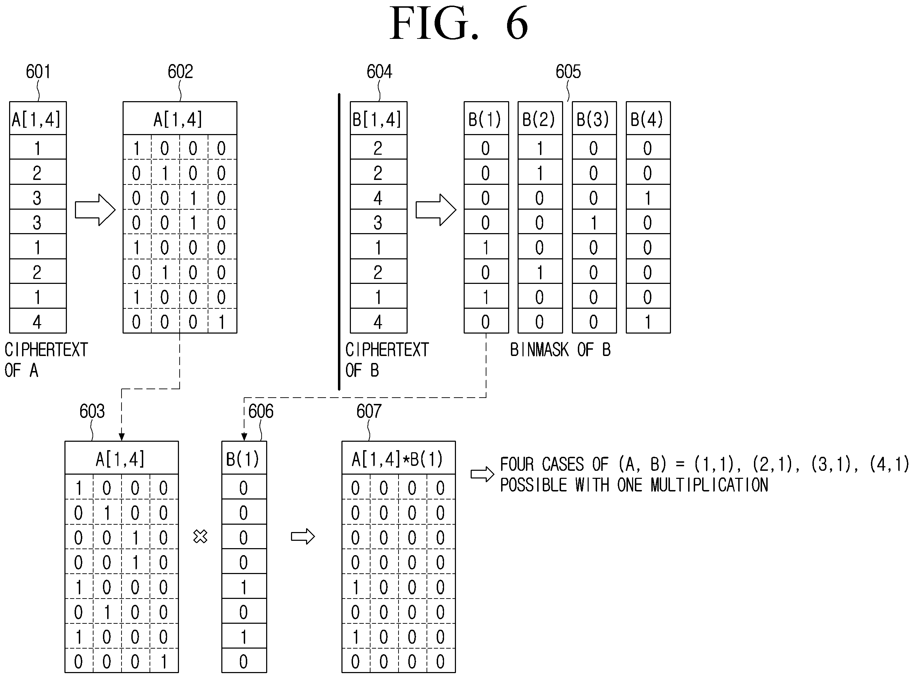

Advantages of utilizing the power bin mask as described above will be described with reference to FIG. 6.

Referring to FIG. 6, a bin operation may be performed on two variables 601 and 604 having one to four bin values, and when an existing bin mask is used, sixteen multiplications may be required. Accordingly, a final result may be known after performing decryption on sixteen ciphertexts. On the other hand, when an expanded bin mask 602 is used, the result may be obtained with only four multiplications and four decryptions. This may be because all position data is included based on the variable in the multiplication result being between 1 and 4.

Because the multiplication between the expanded bin masks is not operated based on the feature of the proposed method, only one expanded bin mask may participate in the calculation of the bin count. In addition, because the number of bins which may be included in the one bin mask is 50 at maximum, a reduction of multiplication times which may be improved by using the proposed method may be 1/50. In addition, because the multiplication which uses the expanded bin mask is to include multiple bin data in one slot, and this results in the increase of bit length to be managed per slot, this may also influence the multiplication time. The number of bins and number of reduction times described above are merely exemplary, and the numerical value may be changed according to a homomorphic encryption scheme applied.

For the statistical operation, it may be necessary to use not only a table of one owner, but also tables of different owners.

Accordingly, a method of joining tables owned by different devices to one table will be described below.

Different databases (DBs) may store homomorphically encrypted data in a different method. However, when each of the different DBs is stored by dividing by feature and dividing by feature of the table, it is possible to easily join the two tables.

Specifically, it may be assumed that an encrypted table is owned by a first electronic device 100-1 and a second electronic device 100-2 which are different, and key data for joining is shared therebetween. If there is a third electronic device 100-3 honestly performing protocol, two encrypted tables may be joined with the assistance of the third electronic device 100-3. The method as described above may be effectively performed in that data joining is possible without an additional homomorphic encryption operation excluding table encryption. In addition, even from a security aspect, there is the advantage that other than the number (inner-join) of common data in the process of performing joining of the plurality of tables or the number (outer-join) of data not owned by oneself from among the data owned by a counterpart, no other data is exposed.

To this end, column values relevant to the key for joining may perform one-way encryption where decryption is impossible by using a separate hash-based message authentication code (HMAC) function rather than homomorphic encryption. At this time, because each of the electronic devices 100-1 and 100-2 share the same HMAC key, the HMAC performance result on the same key value may be the same. However, because the HMAC result also rely on the shared key value, even if it is the same key value, when another HMAC key is used, another HMAC value may be obtained.

The HMAC value and a position value of the row in the table of the original join key used for forming the relevant HMAC value may be combined to form a pair of data, and this data set may be arranged by using the HMAC key value and then transmitted to the third electronic device 100-3. Here, the position value may refer to the join key value and a row number of the other data connected therewith.

A joining company may be configured to identify keys which match by using the HMAC value, based on each electronic device sending row value data gathered together, the relevant first electronic device and second electronic device may be configured to transmit data which encrypted the relevant rows to the third electronic device 100-3, and the third electronic device 100-3 may be configured to perform joining by combining metadata of the data sent from the two devices and forming metadata of one joined table.

A more detailed joining operation will be described below with reference to FIG. 7.

FIG. 7 is a diagram illustrating a joining method on a plurality of encryption tables.

Referring to FIG. 7, the two electronic devices 100-1 and 100-3 may respectively own tables with values of rows and columns different from one another, and if a join key (e.g., resident identification number, or the like in case there are two tables containing data related to human life) which is close to 1:1 (one-to-one) joining that may join the two tables is present, it may mean a protocol forming an encryption table of 1) form on a joining table which joins the two tables.

Participants of the protocol are as follows. Data owning companies $D_1$ and $D_2$ may be present, a data joiner F, and Z which will own the finally encrypted joining table may be present. Here, $D_1$ and $D_2$ may be the electronic device or server illustrated in FIG. 1. In addition, the data joiner may also be the electronic device or server illustrated in FIG. 1.

The data owning companies $D_1$ and $D_2$ may have the same homomorphically encrypted encryption key instance ($pk_h$), and also share a same MAC key (symmetric key $sk_{MAC}$ : 256 bit random bit). The data analyzing company Z may have a calculation key $evk_h$ which may perform calculation on data encrypted with $pk_h$.

A parameter and algorithm on homomorphic encryption may be shared by $D_1$, $D_2$, and Z, and the MAC algorithm ( $MAC$: $\{0,1\}$ * $\times$ $\{0,1\}$ $^{|sk_{MAC}|} \rightarrow \{0,1\}^{MAClen}$) may be shared by A and B.

Data owned by the data owning companies $D_1$ and $D_2$ may be described as below.

The data owning companies $D_1$ and $D_2$ may have data of $m_{D_1} \times n_{D1}$ ($m_{D2} \times n_{D2}$) size each, and a first feature may represent IDs (used as join key) of owners of each data, and may be represented as

$$id^{D_{1_0}}, ..., id^{D_{1_{m_A-1}}} (id^{D_{2_0}, \cdots} id^{D_{2_{m_B-1}}}).$$

The features in the remaining columns may be represented as

$$f^{A_1}, \cdots, f^{A_{n_A-1}} (f^{B_1}, \cdots, f^{B_{n_B-1}}).$$

In addition, $f^{X_i}(id^{X_k})(i \in [0, m_X-1], k \in [0, n_X-1], X \in \{D_1, D_2\})$ may refer to a value of $f_i$ feature on $id_k$ user owned by company X. (Here, [a, b] is a set of all integers which is greater than a and smaller than or equal to b.)

Accordingly, a data tuple on an arbitrary user

$$id^{D_{1_i}}$$

owned by $D_1$ company may be defined as

$$(id^{D_{1_i}} f_1^{D_1}(id^{D_{1_i}}), ..., f^{D_{1_{m_A-1}}}(id^{D_{1_i}})).$$

An operation may be divided into an inner-join of performing joining with respect to the common key present in the data owning companies $D_1$ and $D_2$, and an outer-join of performing joining with respect to all data present in the two companies. The detailed operation is described as below.

(Initial environment) Companies $D_1$, $D_2$, F, and Z are present, and the data owned by the respective companies are the same as described above.

1. Each company $Dx$ ( $\in \{1,2\}$) may add a new column and perform $MAC_{sk_{MAC}}(id_i^{D_X})$ to the relevant columns with respect to all i and X. The relevant value may be added to the row represented as $id^{X_i}$. The relevant value may be described as $mac_{id^{X_i}}$.

2. All data may be arranged by a row unit based on $mac_{id^{X_i}}$ value. The arranged MAC value may be described as $mac^{X_f}$, and the ID value in the relevant position may be described as $id'^{X_i}$. That is data after arrangement may be stored in order in $\left(mac^{X_i}, id'^{X_i}, f_1^X(id'^{X_i}),....,f_{m_{x}-1}^{X}(id'^{X_i})\right)$ $\left(i\in[0,n_X-1]\right)$ form. That is, the row including $mac_i$ may be recorded in the i-th row of an input table. The table may be referred to as $T_X$. $T_X$ may be owned by $D_X$.

3. Each company $D_x$ may transfer $L_X = (i, mac_i^{X}) : i\in[0, m_{D_x}-1]$ to F so that 1 matches the order.

4. F may use the received $L_1, L_2$ to calculate

$$S_{D_1} = \{mac_i^{D_1} | (i, mac^{D_1}) \in L_1\}, \quad S_{D_2} = \{mac_i^{D_2} | (i, mac^{D_2}) \in L_2\},$$

and then define as

$$S_{D_1 \cap D_2} = mac^{D_{1_{i'}}} | mac^{D_{1_{i'}}} \in S_{D_1}$$

and

$$\exists\, mac^{D_{2_{j'}}} \in S_{D_2}$$

such that

$$mac^{D_{1_{i'}}} = mac^{D_{2_{j'}}}.$$

In addition, define as $S_{D1-D2}=S_{D1}-S_{D1\cap D2}$, $S_{D_{2-D_1}} = S_{D_2} - S_{D_1 \cap D_2}$. If function $index^X : S_{D_X} \to Z \cup \{\perp\}$ is defined, it may be defined as $index^X(mac^{D_X})=i$ if $(i, mac^{D_X}) \in L_X$ otherwise $\perp$ with respect to $mac^{D_X} \in S_{D_X}$. If $index^X(S_{D_X})$ performs $index^X$ function respectively on all elements of $S_{D_X}$, it may be defined as converting the result to a data form with order.

First, the outer-join will be first described.

a) Data with order $PD_1=(S_{D_1-D_2}, S_{D_1\cap D2})$, $P_B=(S_{D_1\cap D2}, S_{D1-D2})$ are formed.
b) $R_{D_1}\leftarrow index^{D1}(P_{D1})$, $R_{D_2}\leftarrow index^{D2}(P_{D2})$ are performed.
c) A random number seed $s_{D_1}, s_{D_2}$ is generated to use permutation $\pi$. Using the same, the values of $R_{D_1}$, $R_{D2}$ are mixed by performing $\pi_{s_{D_1}}(R_{D_1}) \to UID_1$, $\pi_{s_{D_2}}(R_{D_2}) \to UID_2$. Here, $\pi_s(R)$ may mean a safe permutation which mixes the order of $R$ value using randomness provided by $s$, and if $s$ is unknown, data on data $R$ with the original order may not be learned. In addition, if $s$ is known, $\pi^{-1}s()$ may be performed.
d) F may transfer UID, to $D_1$, and transfer $UID_2$ to $D_2$. In addition, F may transfer $|S_{D2-D1}|$ to $D_1$, and transfer $|S_{D2-D1}|$ to $D_2$.
e) The $D_x$ which received $UID_x$ may arrange data matching the order of values in the relevant sequence. That is if $UID_X = \{i_0, i_1, \cdots, i_{n_{R_{UID}}}\}$, data may be arranged in $D_X = ((f_1^X(id'^{X_i}),....,f_{m_{x}-1}^{X}(id'^{X_i}))_{i=i_0, i_1,...,i_{n_{UID}}}$ order. Here, it may mean $n_{UID_X} = |UID_X|$.
f) After, $\perp$ sequence of length $m_{D_X}$ formed of $(\perp,...,\perp)$ may be added to $D_X$ by $|S_{D_X-(\{D1,D2\}-DX)}|$ number.
g) X may use the method in 1) to encrypt $D_X$ by column to form an encryption table object $C^{tbx}$, and then transfer with the metadata to F.

h) F may use $\pi^{-1_{S_{D_1}}}, \pi^{-1_{S_{D_1}}}$ to restore the order of $C^{tb1}$, $C^{tb2}$ received from each of $D_1$, $D_2$. Here, the role of $\pi^{-1_{S_{D_1}}}, \pi^{-1_{S_{D_1}}}$ may be performing the role of receiving input of the order of each element of $C^{tb1}$, $C^{tb2}$ and sending the whole encrypted element to a row position which corresponds to the result number. At this time, the ciphertexts on the data added in g) step do not undergo this process.

i) If the result of h) is $C'_1, C'_2$ respectively, the two tables may be combined and one encrypted table $C'$ may be formed. At this time, metadata of the joined encryption table may be generated by joining the metadata of each of $C'_1, C'_2$.

j) F may transfer the joined encryption table $C_R$ to Z.

The inner-join may be similar to the outer-join above, but is different in a), b) and d) processes as below. In addition, f) process may not be performed.

a) Data with order $P_{D_1 \cap D_2} = (S_{D_1 \cap D_2})$ may be formed.

b) $R_{D_1} \leftarrow$ index $^{D1}(P_{D_1 \cap D2})$, $R_{D_2} \leftarrow$ index $^{D2}(P_{D_1 \cap D2})$ may be performed.

d) F may transfer UID, to $D_1$, and UID$_2$ to $D_2$.

An actual statical operation using the bin mask described above will be described below.

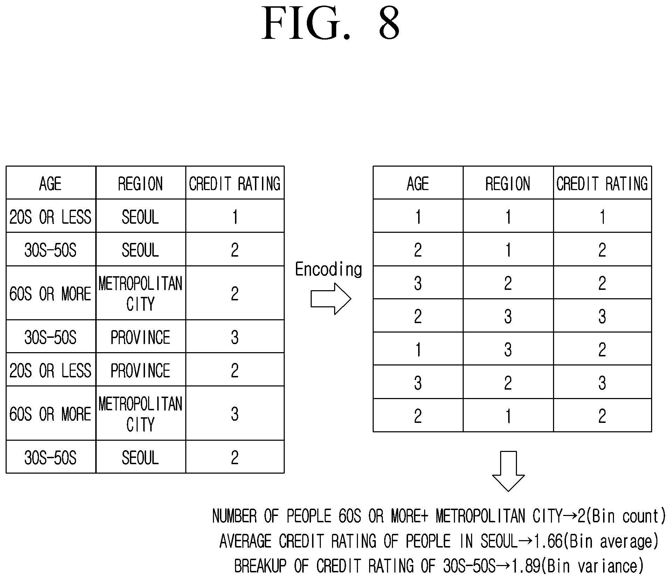

FIG. 8 is a diagram illustrating a statistic calculation method using a bin mask according to an embodiment of the disclosure.

Referring to FIG. 8, raw data and numerical data on the relevant raw data may be shown. Because the operation of converting numerical data with respect to raw data is common, the detailed description will be omitted. In the illustrated example, the numerical data has been shown in a plaintext state for convenience of description, but the actual data is in the homomorphically encrypted ciphertext state.

If the number of people in the metropolitan city of the age 60s or more is to be checked in the data as described above, the count may be carried out by using the bin mask which includes 3 for age and 2 for region.

In addition, if an average credit rating is to be obtained of a person from Seoul, a relevant slot may be detected by using 1 bin mask for the region, and calculate the average by performing homomorphic addition on data of an encrypted credit rating corresponding to the detected slot. A more detailed conditional statistical operation will be described below.

A more detailed operation on the statistic calculation described above using the previously described bin mask and expanded bin mask will be described below.

For convenience of description, a categorical variable may be referred to as a 'bin variable' (or, bin feature), and for convenience of operation, the bin feature will be represented as a positive integer continued from 1. For example, one column of bin variable with three categories may be such that the value of each row is 1 or 2 or 3.

The system according to the disclosure may provide the statistical operation on data of which a certain bin variable has a specific value, that is, belonging to a specific category. This is because data in the specific category and the statistical feature may be different because the average, variance and standard deviation operation above is an operation on all data.

In addition, the statistical operation may be possible on not only the condition on the one bin variable, but also on data having the condition on several bin variables of an arbitrary number.

The statistical operation as described above is the same as realizing the operation formula as below in the encrypted state.

Average:

$$\begin{cases} E(x^{(f_0)}|v^{(f_0)}=1) = \sum_{i=0}^{R-1} x^{(f_0)}(i) \cdot v^{(f_0)}(i) / \sum_{i=0}^{R-1} v^{(f_0)}(i) \; (w/\, v\text{-}bit) \\ E(x^{(f_0)}) = \sum_{i=0}^{R-1} x^{(f_0)}(i)/R \hspace{4cm} (w/o\; v\text{-}bit) \end{cases}$$

Variance:

$$\begin{cases} Var(x^{(f_0)}|v^{(f_0)}=1)=E((x^{(f_0)}-E(x^{(f_0)}|v^{(f_0)}=1))^2|v^{(f_0)}=1) & (w/v\text{-}bit) \\ Var(x^{(f_0)})=E((x^{(f_0)}-E(x^{(f_0)}))^2) & (w/o\,v\text{-}bit) \end{cases}$$

Correlation Coefficient:

$$r(x^{(f_0)},x^{(f_1)}|v^{(f_0)}=1,v^{(f_1)}=1)=\;(w/v\text{-}bit)$$

$$\begin{cases} \dfrac{E(x^{(f_0)}-E(x^{(f_0)}|cond)|cond)E(x^{(f_1)}-E(x^{(f_1)}|cond)|cond)}{\sqrt{Var(x^{(f_0)}|cond)}\sqrt{Var(x^{(f_1)}|cond)}}\,,cond=(v^{(f_0)}=1,v^{(f_1)}=1) \\ r(x^{(f_0)},x^{(f_1)})=\dfrac{E(x^{(f_0)}-E(x^{(f_0)}))E(x^{(f_1)}-E(x^{(f_1)}))}{\sqrt{Var(x^{(f_0)})}\sqrt{Var(x^{(f_1)})}} & (w/o\,v\text{-}bit) \end{cases}$$

It may be assumed that index $f_0, f_1, \ldots f_{m-1}$ of the bin features are present, and integer $c_0, c_1, \ldots c_{m-1}$ is present. The operation below may perform the statistical operation with the condition on $x^{(f0)}=c_0, x^{(f1)}=c_1, \ldots x^{(fm-1)}=c_{m-1}$ bin.

[Equation 9]

$$cond=\begin{cases} (x^{(f_0)}=c_0,x^{(f_1)}=c_1,\ldots x^{(f_{m-1})}=c_{m-1},v^{(f_0)}=1,v^{(f_1)}=1,\ldots v^{(f_{m-1})}=1,v^{(f_r-1)}=1) & (w/v\text{-}bit) \\ (x^{(f_0)}=c_0,x^{(f_1)}=c_1,\ldots x^{(f_{m-1})}=c_{m-1}) & (w/o\,v\text{-}bit) \end{cases}$$

Bin Count: function counting a number of possible cases satisfying the condition in $sum(x^{(ft)}|cond)$ data table.

Average: total of $x^{(ft)}$ column values satisfying $sum(x^{(ft)}|cond)$ condition.

Bin Average: $E(x^{(ft)}|cond)=sum(x^{(ft)}|cond)/cnt(x|cond)$

Bin Variance: $Var(x^{(ft)}|cond)=E((x^{(ft)}-E(x^{(ft)}|cond))^2|cond$

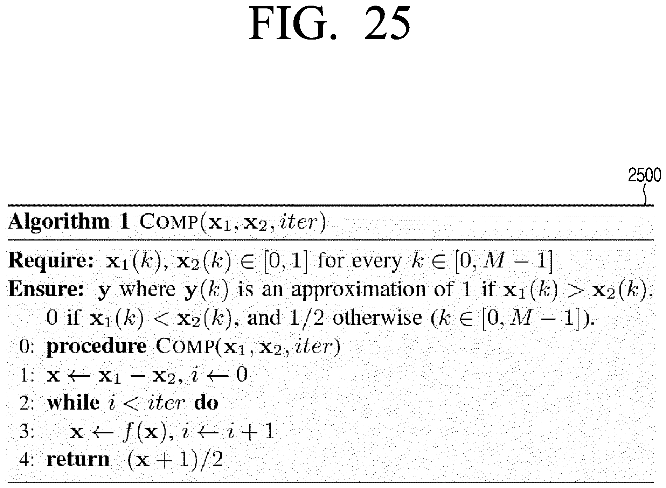

A more detailed statistical operation method will be described with reference to FIGS. 25 to 31.

A comparison operation between the bin variable column and the specific integer value is necessary for the process described above.

However, because the comparison operation using the homomorphic operation involves significant cost, the comparison results may be stored in advance in the bin mask and utilized in the operation.

A certain bin feature $f_0$ may include $s_0$ as a maximum bin variable. That is, each row of one column $x^{(f_0)}$ of the data may include one value from among $\{1,2,\ldots s_0\}$. The bin mask generated at this time may be encrypted columns of a total $s_0$ number, and may be represented as $b_i^{(f_0)}(i=1,2,\ldots s_0)$. Here, $b_i^{(f_0)}$ is one encrypted column, and each row may be shown as 1 or 0 if the row corresponding to bin feature $f_0$ is $i$. Further, $b_{i,j}^{(f_0)}$ may refer to $j$-th block of $b_i^{(f_0)}$.

The operation of generating the bin mask used in the statistical operation will be described in greater detail below.

The bin mask may be generated at the encryption step, and may be generated even after the encryption step. First, the operation of generating the bin mask at the encryption step will be described below with reference to FIG. 9.

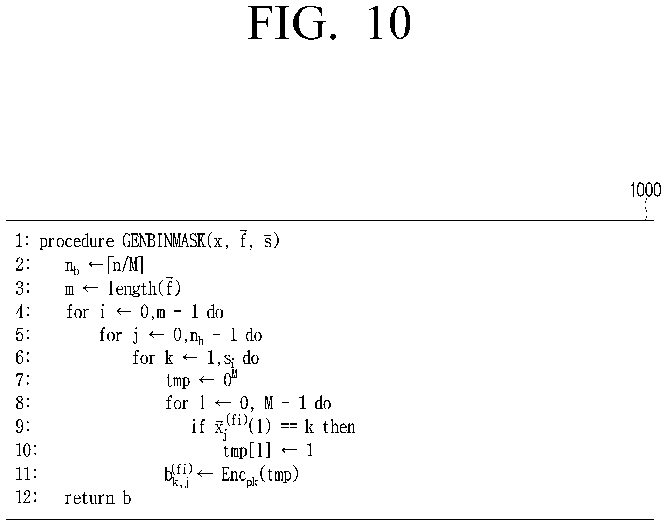

FIGS. 9 and 10 are diagrams illustrating a process of generating a bin mask by using plaintext according to an embodiment of the disclosure. Specifically, the diagrams are for describing the process of generating the bin mask taking into reference data in the plaintext state when proceeding with encryption from the data owner side. Specifically, FIG. 9 is when a v-bit table is used, and FIG. 10 is when a v-bit table is not used.

Referring to FIGS. 9 and 10, an index of bin features for forming a bin mask may be vector $\vec{f}=(f_0,f_1,\ldots f_{m-1})$, and the maximum bin value of each bin feature may be represented as $\vec{s}=(s_0,s_1,\ldots s_{m-1})$.

The data table in the plaintext state may be represented as $x$, and the v-bit table may be represented as $v$. The output value may be b $=\{b^{(fi)}|i=0,1\ldots m-1\}$.

The generating operation of the bin mask after the encryption operation will be described below.

The generating of the bin mask after the encryption operation may be used when data in the plaintext state cannot be approached, and when generating the bin mask using the homomorphic operation in the encrypted state.

First, a realization of an integer comparing operation as below is required in the encrypted stated for the bin mask generation.

[Equation 10]

$$(a \equiv b) = \begin{cases} 1 & \text{if } a = b \\ 0 & \text{if } a \neq b \end{cases}$$

This operation may be represented as $(a \equiv b) = \delta(a-b)$ with respect to a function as with Equation 11 below.

[Equation 11]

$$\delta(x) = \begin{cases} 1 & \text{if } x = 0 \\ 0 & \text{if } x \neq 0 \end{cases}$$

Because the categorical variable includes all integer values, it is to satisfy $\delta(x)$ function with respect to the input of the integer value. Because addition and multiplication are provided in the homomorphic encryption system, the function is to be satisfied within the integer range by approximating the $\delta(x)$ function with any polynomial.

At this time, a sinc function as below may be used as an approximation function

[Equation 12]

$$\text{sin} c(x) = \frac{\sin(\pi x)}{\pi x}$$

The above may include a value such as $\delta(x)$ from all integer values, and a polynomial approximation may be possible. However, when approximating in the wide range, the amount in calculation may increase as the degree of an approximation formula becomes higher. In this case, approximation in a wide range may be possible with only the approximation of a narrow range by using a multiple angle formula of a trigonometric function.

First, using the $\sin 2\phi = 2\sin\phi\cos\phi$ equation, the sinc function may be changed like in Equation 13 as below.

[Equation 13]

$$\text{sin} c(x) = \frac{\sin(\pi x)}{\pi x} = \frac{2}{\pi x} \sin(\frac{\pi x}{2})\cos(\frac{\pi x}{2})$$

$$= \text{sin} c(\frac{x}{2^d})\cos(\frac{x}{2^d})\cos(\frac{x}{2^{d-1}})\ldots\cos(\frac{x}{2})$$

If $\cos(\frac{x}{2^d})$ value is known, because the value of $\cos(\frac{x}{2^{d-1}}),\ldots\cos(\frac{x}{2})$ can all be known by using the $\cos 2\phi = 2\cos^2\phi - 1$ formula, the $\text{sin} c(x)$ value may be obtained if the values of $\text{sin} c(\frac{x}{2^d})$ and $\cos(\frac{x}{2^d})$ are known. Accordingly, the $\text{sin} c(x)$ value may be known in $[-\mu,\mu]$ with only approximating $\text{sin} c(x)$ and $\cos(x)$ in $[-\frac{\mu}{2^d}, \frac{\mu}{2^d}]$ range.

A Chevyshev approximation may be used as below for the approximation of the $f(x)=$ sinc $(x)$ or $f(x)=\cos(x)$ function. However, other approximation methods may be used at realization.

[Equation 14]

$$f(x) \approx \frac{1}{2}c_0 + \sum_{j=1}^{K} c_j T_j(x)$$

Here, $c_j$ is the same as in Equation 15.

[Equation 15]

$$c_j = \frac{2}{K+1} \sum_{k=1}^{K+1} f\left[\cos\left\{\frac{\pi(2k-1)}{2(K+1)}\right\}\right]\cos\left\{\frac{\pi j(2k-1)}{2(K+1)}\right\}$$

Here, $T_j(x)$ is a $j$-th Chevyshev polynomial.

The polynomial generated according to the approximation method described above may be a $K$-th polynomial.

When using the method as described above, approximation may be carried out with a small error in [-1,1] range, and if $K$ is an even number, the approximation formula may include a value of 1 exactly when $x=O$.

If there is an error present, because the value of the bin mask may not include a value of 1 exactly as the error is continuously amplified when calculating sinc $(x)$ using the multiangle formula, $K$ may be set as an even number.

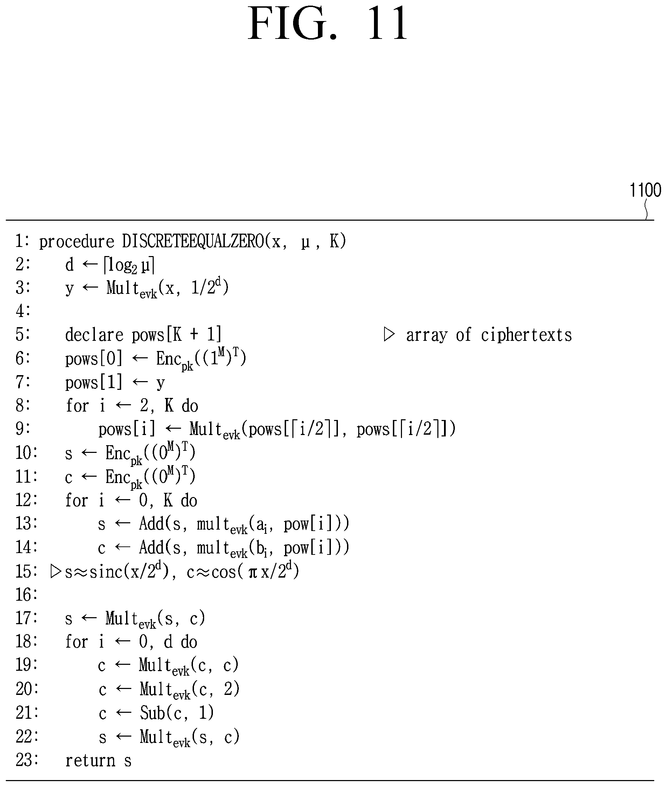

FIG. 11 is a diagram illustrating an approximation algorithm according to an embodiment of the disclosure. Specifically, the DiscreteEqualZero algorithm in FIG. 11 represents the approximation algorithm of sinc$(x)$ function using the above-described method.

Referring to FIG. 11, each slot may receive ciphertext $x$ which is an integer value as an input, and return the ciphertext of which the slot, with the value of the corresponding slot being 0, is 1 and the rest of the slot is 0. By using the approximation formula above, it may be assumed that coefficient $a_i, b_i (i=0,1,..K)$ of

$$\text{sin}c(x) \approx \sum_{i=0}^{K} a_i x^i \quad \cos(\pi x) \approx \sum_{i=0}^{K} b_i x^i$$

is calculated in advance.

Each slot of x with respect to $\mu$ of the input may be a value in $[-\mu,\mu]$ range, and $K$ may be an even number as a degree of approximation polynomial. M of the process may be the number of slots in one ciphertext.

At this time, the multiplication operation may be $O(K+3\lceil\log 2\mu\rceil)$ time.

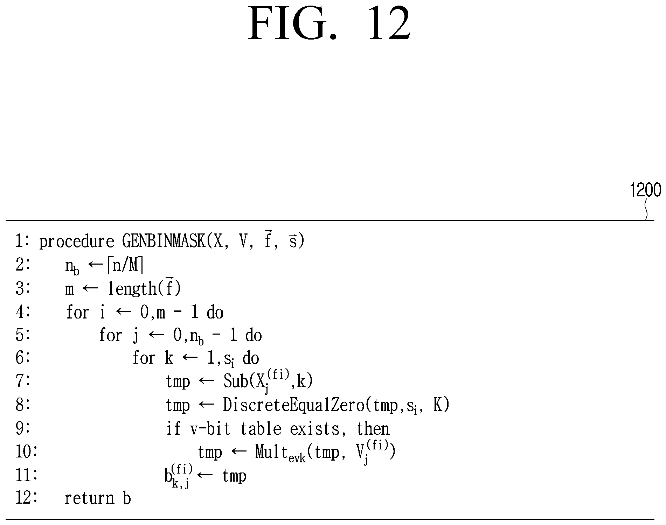

The bin mask generating operation which uses the integer comparing operation by using the method described above will be described with reference to FIG. 12.

FIG. 12 is a diagram illustrating a bin mask generating operation using a homomorphic ciphertext according to an embodiment of the disclosure.

Referring to FIG. 12, the index of the bin features creating the bin mask may be vector $\vec{f}=(f_0, f_1,...f_{m-1})$, and the maximum bin value of each bin feature may be represented as $\vec{s}=(s_0, s_1,...s_{m-1})$.

Encrypted data table X, and encrypted v-bit table V may be received as input.

The output value may be $b = \{b^{(f_i)}|i=0,1,...m-1\}$. If all slot values are valid in the encrypted state, one multiplication operation may be reduced in rows 8 and 9 of FIG. 12.

A detailed method of calculating the bin count by using the generated bin mask will be described below.

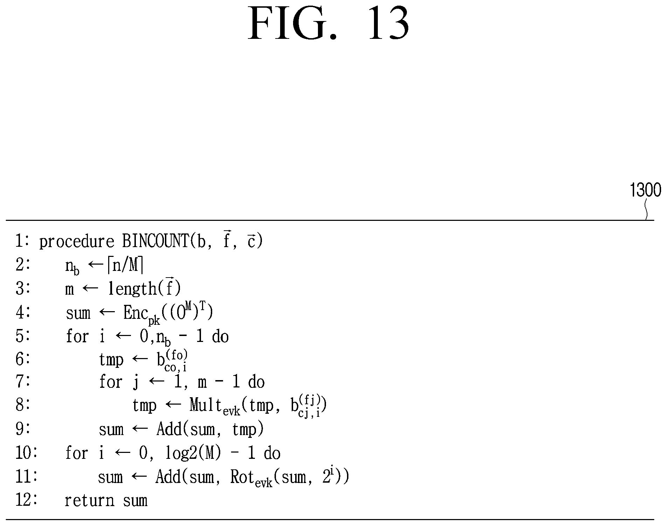

FIG. 13 is a diagram illustrating an operation of a bin count operation according to an embodiment of the disclosure.

Here, the bin count operation may be a function which counts the number of rows satisfying the condition on the several bin features.

When receiving vector $\vec{c}=(c_0, c_1,...c_{m-1})$ formed of vector $\vec{f}=(f_0, f_1,...f_{m-1})$ and integer value of the bin feature as an input, the bin count operation may include counting the number of valid data which satisfies m number of conditions of $f_0$-th feature value being $c_0$, ... $f_{m-1}$-th feature value being $c_{m-1}$.

When using the previously generated bin mask, because v-bit was taken into reference in the previous bin mask process, a separate consideration on v-bit is not necessary.

If all conditions are satisfied when all the bin masks corresponding to the condition are multiplied row-wise, the value may be 1 and if not 0.

Accordingly, the bin count operation may add the value of all slots of the multiplication result.

In FIG. 13, as input b = $\{b^{(f_i)}|i=0,1,...m-1\}$ of the bin count operation, it is a set of bin masks which is the output value from the previous bin count generating process.

Further, when $n_b$ is the number of blocks in one column, m is the number of conditions, and $M$ is the number of slots in one ciphertext, the process above may perform $O(n_b{}^*m)$ number of multiplications and $O(\log 2M)$ rotation operation.

A modification of the above-described operation of the bin count operation will be described below.

First, the modified bin count method (hereinbelow, referred to as a large bin count) may obtain all number of possible cases formed by the several bin features of a certain data and represent the result in table form.

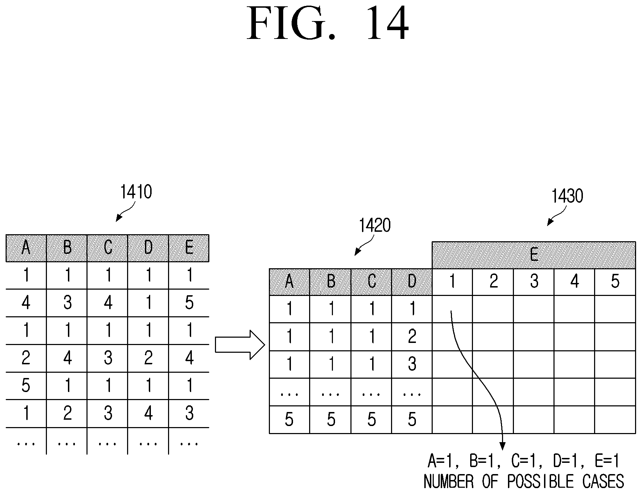

The specific operation will be described with reference to FIG. 14.

FIG. 14 is a diagram illustrating original data and a target of a large bin count operation according to an embodiment of the disclosure.

Referring to FIG. 14, the result table of the maximum bin variable seeking five bin features A, B, C, D, E is shown.

If a large bin count is performed on m number of bin features having $s_0,s_1,...s_{m-1}$ with the maximum bin value respectively, a result table representing all $\prod_{i=0}^{m-1} s_i$ counts of number of possible cases may be obtained.

The bin count method may use the bin mask which was previously formed as described above. Bin mask $b_i^{(f_0)}$ may be an encrypted column which represents whether the value of each row of a certain bin feature $f_0$ matches with i (i is a positive integer) as 1 or 0. (If it is a match with i may be shown as 1, and if not as 0.)

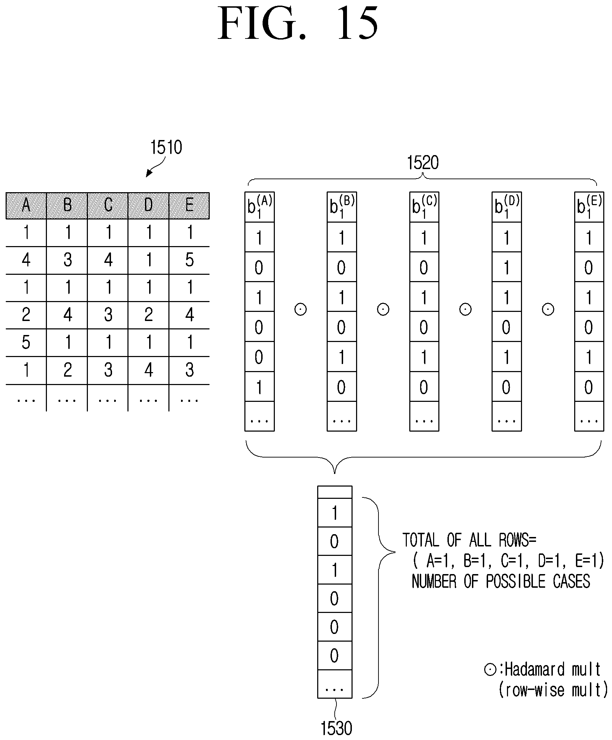

As illustrated in FIG. 14, a method of counting the number of possible cases when all five features include a value of 1 is as described below. The method will be described with reference to FIG. 15.

FIG. 15 is a diagram illustrating a method of calculating a number of a specific number of cases by using a bin mask.

Referring to FIG. 15, if bin masks $b_1^{(A)}, b_1^{(B)}, b_1^{(C)}, b_1^{(D)}, b_1^{(E)}$ are all multiplied, the value of 1 may remain only in s row when all features are 1, and the rest may all be 0.

Accordingly, the number of possible cases sought may be obtained by adding the value of all rows of the multiplication result.

However, only the number of one possible case from among all combinations may be obtained through the process of multiplying and adding the bin masks as described above.

Accordingly, when bin features $f_0,f_1..f_{m-1}$ of m number include $s_0,s_1,...s_{m-1}$ as maximum bin value, the process above is to be repeated by $\prod_{i=0}^{m-1} s_i$ times in order to obtain the number of possible cases of all combinations formed by the features.

The data table may include rows of n number, and when each ciphertext includes slots of M number, each row may include blocks of l 1 number. Accordingly, multiplication of a total $\lceil n/M \rceil * (m-1) * \prod_{i=0}^{m-1} s_i$ number is required.

The number of bin features seeking the number of possible cases, or the number of multiplication operations necessary as each of the maximum bin value increases may increase.

Accordingly, a method for calculating the number of possible cases with multiplication of a small number will be described below.

In order to perform the object as described above, the power bin mask may be used in place of the bin mask.

Each row of the power bin mask may include a value of $2^{(i-1)\times\Delta+\delta}$ when the value of the corresponding bin feature is i. That is, a margin of about $\triangle$ may be provided for each bin value.

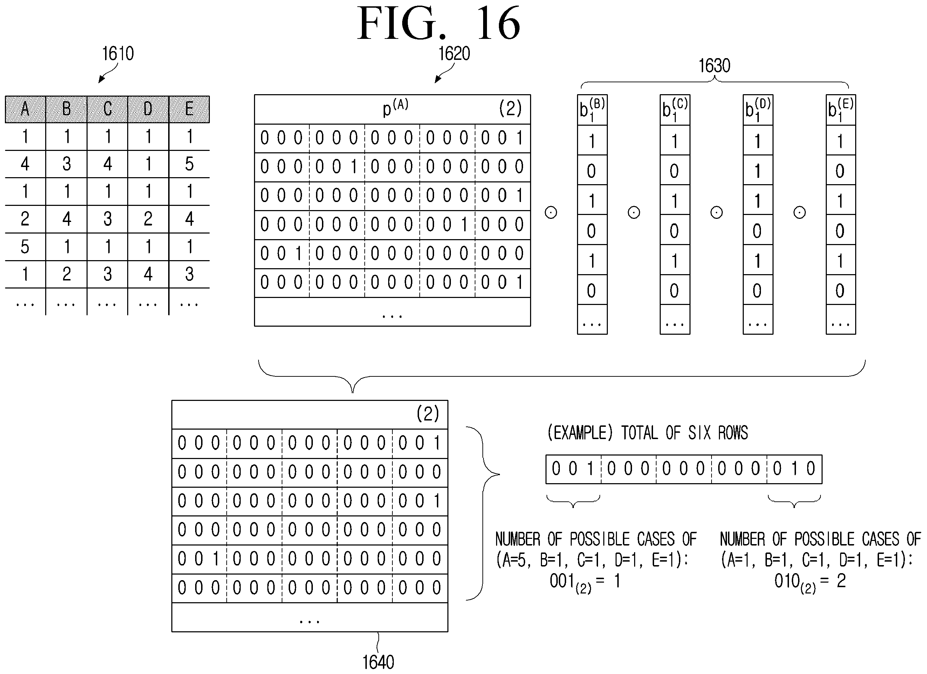

FIG. 16 is a diagram illustrating an operation of a bin count operation using a power bin mask according to an embodiment of the disclosure.

Referring to FIG. 16, described is an example of forming the power bin mask 1620 by setting as $\delta=0$, $\Delta=3$, and

using feature A 1610. Each row is represented in binary notation.

Based on the power bin mask 1620 being generated as described above, $\mathrm{p}^{(A)}, \mathrm{b}_1^{(B)}, \mathrm{b}_1^{(C)}, \mathrm{b}_1^{(D)}, \mathrm{b}_1^{(E)}$ 1630 may be multiplied as in the previous method.

The value of each row in the multiplication result may be 0 when features B, C, D and E are all not 1. Then, the value of all rows may be added. If it can be ensured that the number of rows being added at this time is less than $2^\Delta$, the addition result may be respectively stored in an area by about $\Delta$bit.

The example in FIG. 16 is a result of having added only the provided six columns 1640. The value in the lowest 3 bit at this time shows the number of possible cases in which all features are 1, and the value stored in the highest 3 bit shows the number of possible cases in which feature A is 5 and the rest is 1.

The result value may include both B, C, D and E being 1, and five counts of number of possible cases when A = 1 ~ 5. Accordingly, although the method may include performing the multiplication operation of the same number as the previous bin count method, it may be equivalent to obtaining a number of possible cases which is 5 times more.

Accordingly, bin features $f_0, f_1...f_{m-1}$ of m number may include $s_0, s_1,...s_{m-1}$ as the maximum bin value, and when trying to obtain the number of possible cases of all combinations thereof with $f_0$, the number of multiplication times may be reduced by $1/s_0$ times in theory when a bin mask expanded with $f_0$ is generated.

In order to apply the power bin mask method as described above, each row of the bin mask is to be represented as 0 or $2^\Delta$ (here, $\Lambda$ is a positive integer) rather than 0 or 1 considering an error term of the homomorphic encryption method.

When bin mask is multiplied by $m$-1 number, the value of each row is increased by up to a maximum $2^{(m-1)\Lambda}$, and the value is not to exceed a modulus bit of the homomorphic ciphertext.

To this end, a process of representing bin features of $m$-1 number as new bin features of k number may be included ($m$-1>k).

This is because if a bin mask is formed and multiplied with one another in the method described above with respect to the new bin features of $k$ number, the maximum value of each row may be reduced by $2^{k\Lambda}$.

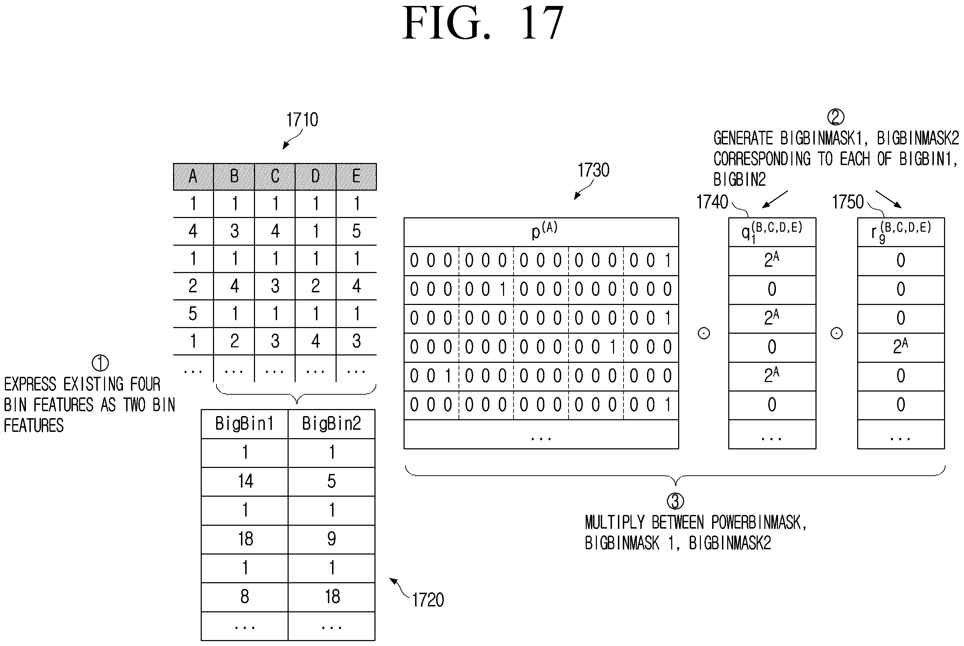

The whole bin count operation which considers the error term as described above is the same as in FIG. 17.

FIG. 17 is a diagram illustrating a bin count operation considering an error term according to an embodiment of the disclosure.

Referring to FIG. 17, bin features 1740 and 1750 of four B, C, D and E may be formed as two new bin features and a new big bin mask may be formed. When a big bin mask as described above is formed, the big bin mask my be multiplied to the previously generated power big mask 1730 to obtain the number of possible cases.

In summarizing the operation of the bin count operation as described above, first the power bin mask and the big bin mask may be generated proactively. The bin mask process as described above may be performed in the encryption process. Alternatively, it may be performed after the encryption process.

When the power bin mask and the big bin mask are generated, the multiplication operation between the relevant masks may be performed. Then, a decryption process for checking the operation result may be performed.

Specifically, an expanded bin mask may be generated with one feature ($f_0$) for the large bin count operation.

Then, a big bin mask of $k$ number may be generated with the rest of ($f_1, f_2,...f_{m-1}$) of $m$-1 number ($k<m$-1). This is to represent columns of m-1 number as columns of $k$ number which is a smaller number, and a process of forming a bin mask of a new column. For convenience of description, a case of $k$=2 will be described below. The big bin mask generated as described above may be referred to as big bin mask 1 and big bin mask 2, respectively.

At this time, the generated expanded bin mask, big bin mask 1, and big bin mask 2 may be represented as p, $q^{(i)}$, $r^{(i)}$ ($i$=1,2,...Q), respectively. (p, $q^{(i)}$, $r^{(i)}$ ($i$= 1,2,...Q) may be equivalent to one column encrypted respectively.

Accordingly, it may be comprised of ciphertext by a block number ($\lceil n/M \rceil$) for one column, respectively.)

[Equation 16]

$$q=\{ q^{(1)}, q^{(2)},... q^{(Q)}\}, \quad r=\{ r^{(1)}, r^{(2)},... r^{(Q)}\}$$

$$\mathrm{p}_k^{(f_0)}(j), \quad \mathrm{q}_k^{(f_1,...f_m)}(j), \quad \mathrm{r}_k^{(f_1,...f_{2t})}(j)$$ : a value relevant to $j$+1-th slot of $k$+1-th ciphertext in each mask ( $i$=0,1,...$m$-1, $k$=0,1,... $\lceil n/M \rceil$ -1, $j$=0,1,...M-1)

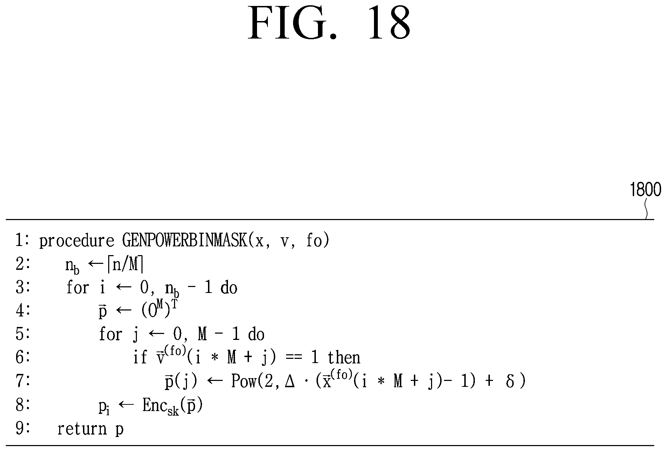

FIG. 18 is a diagram illustrating a generation operation of a power bin mask according to an embodiment of the disclosure.

Referring to FIG. 18, the expanded bin mask may be represented such that the value of each slot is $2^{(i-1)\times\Delta+\delta}$, $i(\in[1,50])$.

Because an error is generated at a lower bit in a specific homomorphic encryption system, an offset of lower $\delta$ bit is provided to each slot value of the power bin mask.

$x,v,f_0$ of input may be an index of the bin feature for forming a data table, v-bit table in plaintext state, and power bin mask, respectively.

Further, n may be a number of data rows, and M may be a number of slots of one ciphertext.

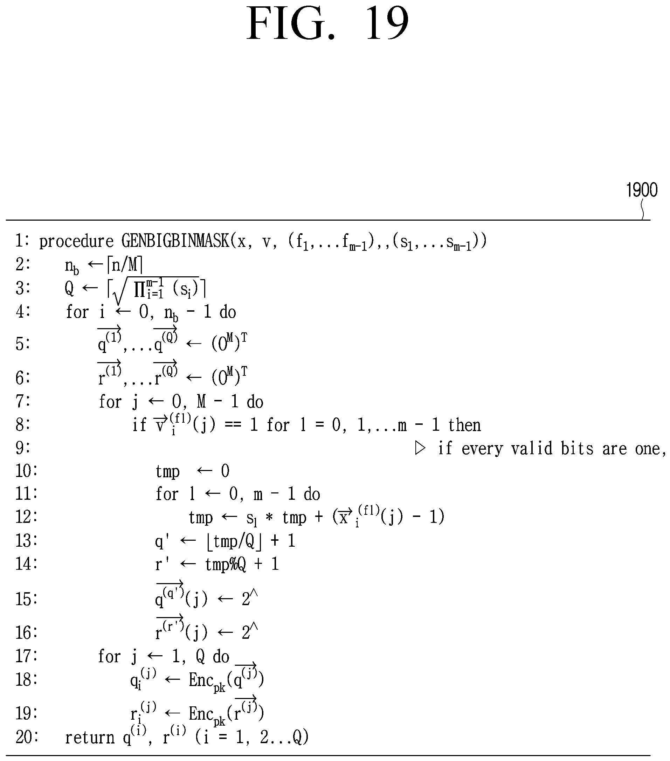

FIG. 19 is a diagram illustrating a generation operation of a power bin mask according to another embodiment of the disclosure.

Referring to FIG. 19, assuming that bin variables of $m$-1 number excluding the one used to form the power bin mask are represented as two new bin features, described is a process of generating a mask on the new bin features.

A typical bin mask represented whether it is relevant to a specific value as 0 or 1, but it may be represented as 0 or $2^\Lambda$ in this case.

If a feature index of $m$-1 number is $f_1,f_2,...f_{m-1}$ respectively, and the maximum bin value of each feature is

$$Q=\lceil\sqrt{\prod_{i=1}^{m-1}s_i}\rceil$$

$s_1,s_2,...sm$-1, the new two variables may each include as the maximum bin variable. Here, $x,v$ may be a data table in plaintext state and v-bit table in plaintext state, respectively.

As a result of this process, bin masks on the two new assumed columns may be generated. That is, it may be equivalent to columns of $2*Q$ number, of which the number of rows is n, being generated.

This process is so that the value stored in each slot of the multiplication process of the large bin count is not greater than or equal to the modulus bit.

As described above, when the large bin count and the big bin count are prepared, the multiplication operation may be performed.

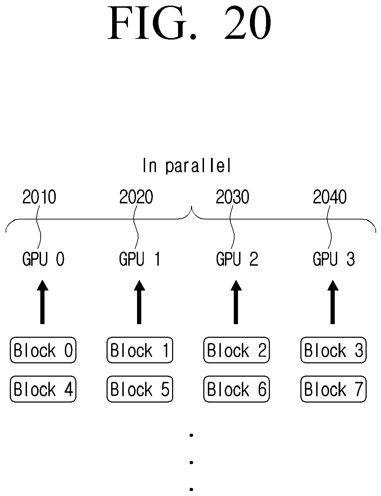

Specifically, all $p_k \cdot q_k^{(i)} \cdot r_k^{(j)}$, $(i,j=1,2,...Q,\ k=0,1,...\lceil n/M\rceil-1$) may be calculated. A GPU may be used in the homomorphic multiplication operation of this process, and each GPU may perform the multiplication operation on a block basis. The specific operation will be described below with reference to FIG. 20.

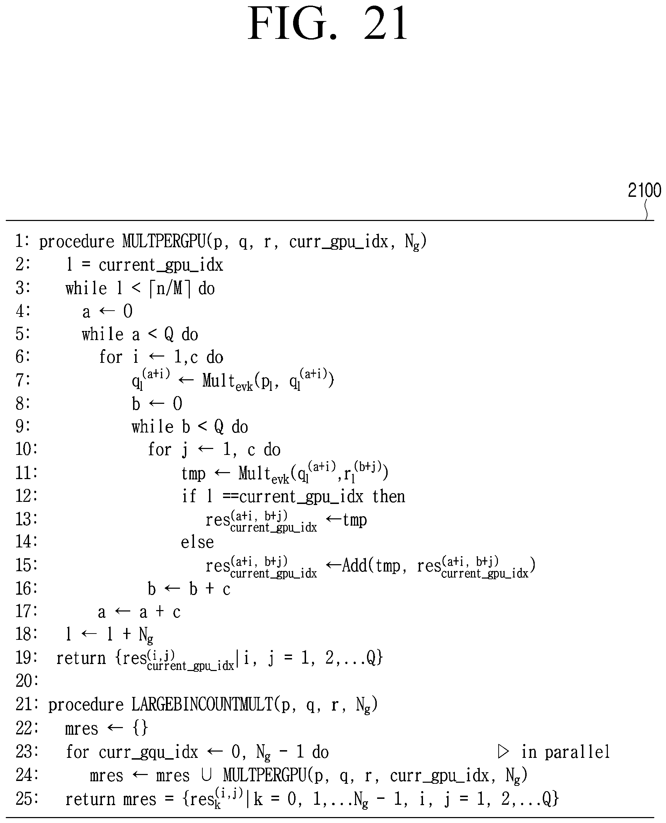

FIG. 20 is a diagram illustrating an operation of a multiplication operation between a plurality of bin masks according to an embodiment of the disclosure. Further, FIG. 21 is a diagram illustrating an operation of a multiplication operation using a plurality of GPUs.

Referring to FIG. 20, each GPU 2010, 2020, 2030 and 2040 may be operated in parallel. Accordingly, if the number of GPUs is $N_g$ number, blocks of a total of $N_g$ number may be simultaneously processed for every one block. The GPUs 2010, 2020, 2030 and 2040 may at first be allocated with block jobs of $N_g$ number, and after completing the job, process the job in a manner of receiving allocation of the next block job of $N_g$ number in order. Then, the number of ciphertexts loading in the GPU all at once may be limited according to the memory capacity of the GPU.

After processing one block, a result ciphertext may be generated by $Q^2$ number.

When the above is stored with respect to all blocks, it may become $\lceil n/M\rceil *Q^2$ number and this may require greater storage space as the block number increases. Accordingly, if the number of blocks is greater than a number ($N_g$) of GPU, the result ciphertext of the previously processed block may be called and stored after adding with the new result ciphertexts. Accordingly, the number of ciphertexts which may be stored may be limited to a maximum $N_g*Q^2$.

When the GPU is able to load one expanded bin mask, big bin mask 1 of c number, and big bin mask 2 of c number all at once in the operation process, the algorithm may be as described in FIG. 21.

In FIG. 21, c is a certain positive integer, and may be determined according to a size of the memory of the GPU being used. The mask columns (p,q,r) generated in the previous process, and the number of GPUs for performing the operation may be received as input.

Because the mask generated through the process as described above is in an encrypted state, utilizing the data as is may be difficult. Accordingly, the decryption operation after the operation of multiplication operation will be described below.

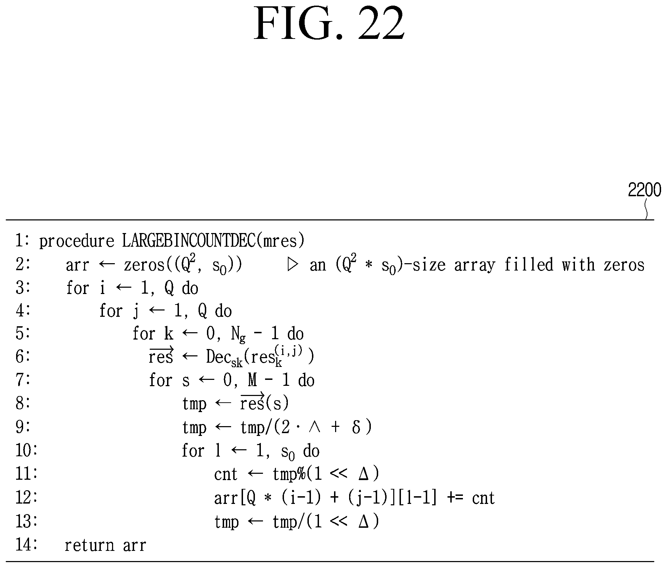

FIG. 22 is a diagram illustrating a decryption operation after multiplication operation according to an embodiment of the disclosure.

Referring to FIG. 22, first, based on a review of the elements of

$$\mathrm{mres}=\left\{\mathrm{res}_k^{(i,j)}\,|\,k=0,1\ldots N_g\text{-}1,\,i,j=1,2\ldots Q\right\}$$ which are output values of a previous operation, the number of possible cases of $(i,j)$ with respect to value $i$ of BigBin1, and value $j$ of BigBin2 may be a total $Q^2$.

Because BigBinl, BigBin2 represent m-1 number features as two features, $(i,j)$ pair may be mapped as one possible case from among the combination of bin features of $m$-1 number. There may be $N_g$ number of ciphertexts with the value of BigBin1 being $i$, and the value of BigBin2 being $j$.

Accordingly, after decryption of all ciphertexts of $Ng$ number, by cutting the value of each slot to a bit unit and adding only the values of $\triangle$ bits of $(2 \cdot \Lambda + l \cdot \Delta + \delta) \approx (2 \cdot \Lambda + (l\text{-}1) \cdot \Delta + \delta)$, the number of possible cases in which the bin feature $f_o$ value which formed the expanded bin mask is 1 may be obtained.

As illustrated above, with the input value of the relevant algorithm, the result of the multiplication process of the previous bin mask is required. With the result of this process, a table of $Q^{2*}s_0$ size containing number of all possible cases may be obtained.

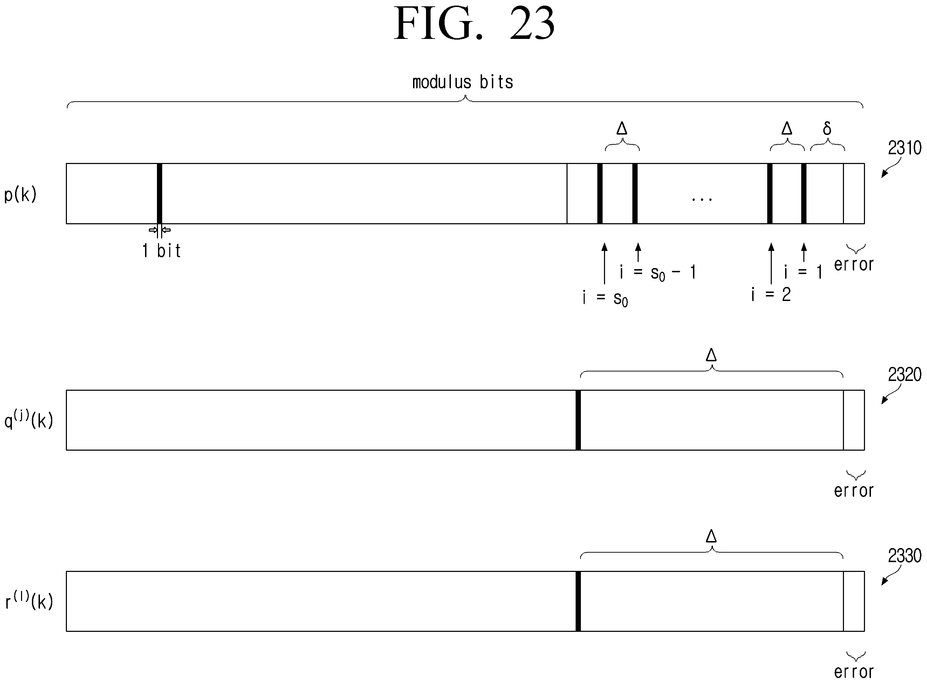

FIG. 23 is a diagram illustrating a data structure of a bin mask according to an embodiment of the disclosure. Specifically, FIG. 23 is a diagram showing an area taken up by the values of each slot when a power bin mask 2310 and big bin masks 2320 and 2330 are generated.

Referring to FIG. 23, because the maximum bin value of feature $f_o$ is $s_o$, the power bin mask may include one value from among $2^{(\Delta \cdot 0 + \delta)}, 2^{(\Delta \cdot 1 + \delta)}, \ldots 2^{(\Delta \cdot (s0-1) + \delta)}$. Then, the big bin masks $q_{k(i)}$, $r_{k(j)}$ may include a value of $2^{\Lambda}$ or 0. Accordingly, it may be equivalent to only one bit of $^{\Lambda}$-th bit being represented as 0 or 1.

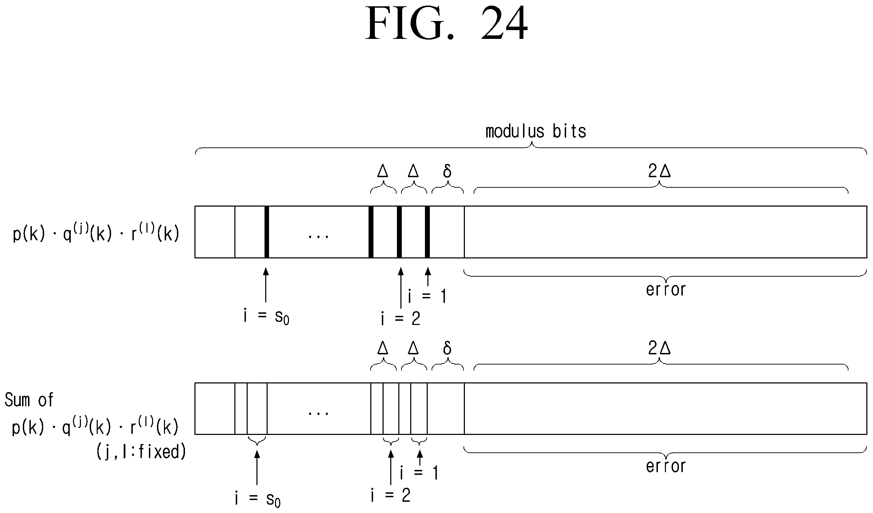

FIG. 24 is a diagram illustrating a data structure of a multiplication operation result according to an embodiment of the disclosure. Specifically, FIG. 24 shows a use of modulus bit of an arbitrary slot obtained as a result of a multiplication operation process.

Referring to FIG. 24, by adding the results processed in the same GPU, the areas of about $\triangle$ bit as in the drawing below may all be shown as representing the number of possible cases where the value of the bin feature which generated power bin mask is $l$. Because the area representing the bin feature value being $l$+1 is not to be intruded because of the value increasing, the maximum number of blocks $\left\lceil \left\lceil n/M \right\rceil / N_g \right\rceil$ processed by one GPU is not to exceed $2^{\Lambda}$.

If the description illustrated in FIG. 24 is represented in a formula, one slot of the power bin mask may be $2^{(i\text{-}1) \times \Delta + \delta} + e$, $i (\in [1, s_0])$, and the big bin masks may be $a \cdot 2^{\Lambda} + e$, $(a \in \{0,1\})$.

What is to be obtained through this operation is whether it is relevant to a specific bin value, and may be identified through a value from lower $(2\Lambda + s_0 \cdot \Delta + \delta)$-th bit to $(2\Lambda + s_0 \cdot \Delta + \delta)$ bit of an arbitrary slot of a multiplication result.

The multiplication result of an arbitrary slot may be represented as in Equation 17 below.

[Equation 17]

$$\{2^{(i\text{-}1) \times \Delta + \delta} + e\} \cdot \{a_1 \cdot 2^{\Lambda} + e\} \cdot \{a_2 \cdot 2^{\Lambda} + e\}$$

$$\approx a_1 a_2 \cdot 2^{((i\text{-}1) \cdot \Delta + \delta + 2\Lambda)} + \{2^{2\Lambda} + 2 \cdot 2^{((i\text{-}1) \cdot \Delta + \delta + 2\Lambda)}\} \cdot e \qquad (a_1 a_2 \in \{0,1\})$$

At this time, the lower bit of the value desired by the error of the multiplication result is not to be exceeded, and an upper bit of the value is not to exceed the modulus bit. That is, the error term $(2^{2\Lambda} + 2^{((s_0\text{-}1) \cdot \Delta + \delta + \Lambda) + 1}) \cdot e$ of the multiplication result may not intrude $2^{2\Lambda + \delta}$, and the maximum bit $(2\Lambda + (s_0\text{-}1) \cdot \Delta + \delta)$ may not be greater than the modulus bit used in the homomorphic encryption system.

Considering that the result generated in another block is added to thereto after the multiplication, the equation is to be adjusted to have a margin of about $\triangle$ bit in the condition above. The result is as follows. It may be assumed that $b_m$ is the modulus bit, and a log upper bound of the error term is $b_e$ ( $|e| < pow(2, b_e)$, $b_c < O$). Equation 18 below may be an equation on the error term, and Equation 19 may be an equation on the modulus bit.

[Equation 18]

$$(2^{2\Lambda}+2^{((s_0-1)\cdot\Delta+\delta+\Lambda)+1})\cdot e<2^{2\Lambda+\delta-\Delta}.$$

[Equation 19]

$$(2\Lambda+s_0\cdot\Delta+\delta)<b_m$$

Accordingly, $\Delta,\delta,\Lambda$ may be set to satisfy the condition of $\lceil\lceil n/M\rceil/N_g\rceil<2^\Delta$ and two inequations above.

Although the big bin mask has been formed by representing features of m-1 number as two columns in the above-described process, it may be possible to also represent as columns of arbitrary natural numbers of k-number.

$$Q=\lceil\sqrt[k]{\prod_{i=1}^{m-1}s_i}\rceil$$

When representing as columns of k-number, it is to be set as the above, and it is to be divided repeatedly with Q by k times in the big bin mask generating process, and the rest may be set to a bin value of a new column.

In this case, the result of multiplication may be

$$\{2^{(i-1)\cdot\Delta+\delta}+e\}\cdot\prod_{j=1}^{k}a_j\cdot2^\Lambda+e$$
$$\approx a\cdot2^{((i-1)\cdot\Delta+\delta+k\Lambda)}+\{2^{k\Lambda}+k\cdot2^{((i-1)\cdot\Delta+\delta+(k-1)\Lambda)}\}\cdot e$$
$$(a,a_j\in\{0,1\}),$$

and a limiting formula on the error term and modulus bit above may be described as below.

[Equation 20]

$$(2^{k\Lambda}+k2^{((s_0-1)\cdot\Delta+\delta+(k-1)\Lambda)})\cdot e<2^{2\Lambda+\delta-\Delta}$$

In the large bin count process as described above, the homomorphic multiplication operation of $\lceil n/M\rceil(Q^2+Q)$ number may be used.

FIG. 25 is a diagram illustrating a comparison operation according to the disclosure.

In order to calculate the statistic calculation, a comparison of values in the homomorphic ciphertext may be necessary. That is, it may be necessary to check whether the ciphertext value in the homomorphic ciphertext corresponds to a specific variable value. FIG. 25 shows a comparison algorithm for the above.

Referring to FIG. 25, two variables may be received, and a comparison result may be calculated through the operation by the two variables. In the homomorphic ciphertext state, a comparison result may be calculated by using the approximation function on the sinc function as described above.

FIGS. 26 to 28 are diagrams illustrating various statistic calculation methods according to an embodiment of the disclosure.

Specifically, FIG. 26 shows an algorithm 2600 on an average calculation method.

Referring to FIG. 26, when an index vector $\vec{f}=(f_0,f_1,...f_{m-1})$ of the bin feature and a vector $\vec{c}=(c_0,c_1,...c_{m-1})$ representing a conditional bin value are present, the average value of feature $f_t$ of rows satisfying m number conditions of $f_0$-th feature value being $c_0$, ... and $f_{m-1}$-th feature value being $c_{m-1}$ may be calculated. This may be equivalent to applying the average (Avg) process described previously on a column including $f_1$ column as data, and multiplication of bin masks satisfying the condition with v-bit. To this end, the process of determining data column $X^{(f_*)}$ and v-bit column $V^{(f_*)}$ on a temporary feature $f_*$ may be performed.

The whole process is as follows. *X,V* may respectively be the encrypted data table and the v-bit table, and b may be a set of BinMask. $\vec{f}, \vec{c}$ may represent the condition on the bin variable, $f_1$ may represent the index of the column seeking the average, and $f_*$ may represent the index of the column temporarily generated in the process of seeking the average. *k* may be an iteration number of ApproxIn in an average operation.

The process above may be equivalent to multiplication of $O(m)$ number being added to the Average process. Accordingly, multiplication of $O(n_b+2k+m)$ and rotation process of $O(2log2(M))$ number may be required. ( $n_b$ is the block number of one column, k is the iteration number in an inverse process of the average operation, and M is the number of slots per one ciphertext.)

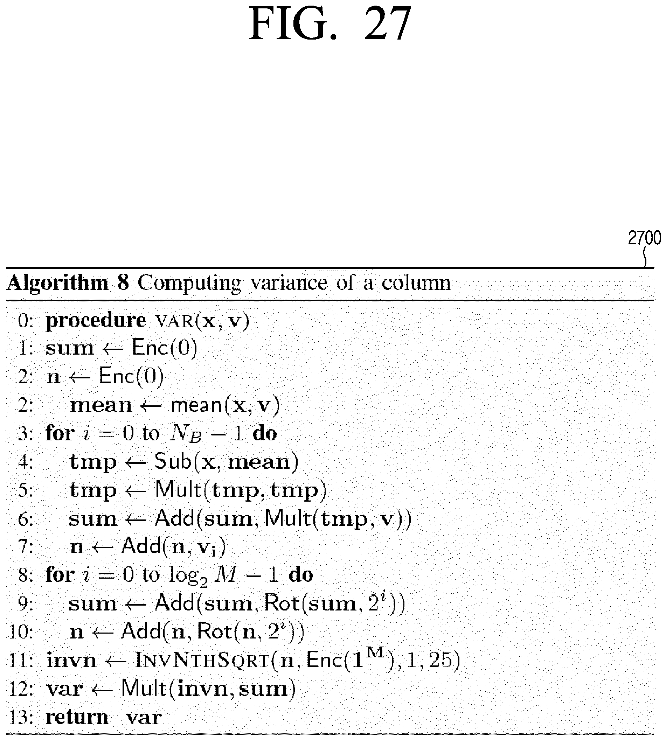

Further, FIG. 27 is a diagram illustrating an algorithm 2700 on a method of calculating variance.

Referring to FIG. 27, like the bin average process above, this time a variance rather than the average may be obtained. Likewise, the variance operation described previously may be applied by generating a temporary data column $X^{(f*)}$ and v-bit column $V^{(f*)}$. The process is as described below. X, Y may be the data table and the v-bit table respectively, and b may be the BinMask set. $\vec{f}, \vec{c}$ may represent the condition on the bin variable, $f_1$ may represent the index of the column seeking the average, and $f_*$ may represent the index of the column which is temporarily generated in the process seeking the average. *k* may represent the iteration number of ApproxIn in the average operation.

The process above may be equivalent to the multiplication process of about $O(m)$ being added to the previous variance process. Accordingly, multiplication of $O(3n_b+2k+m)$ and rotation operation of $O(3log2(M))$ may be necessary. ($n_b$ is the block number of one column, k is the iteration number in an inverse process of the average operation, and M is the number of slots per one ciphertext.)

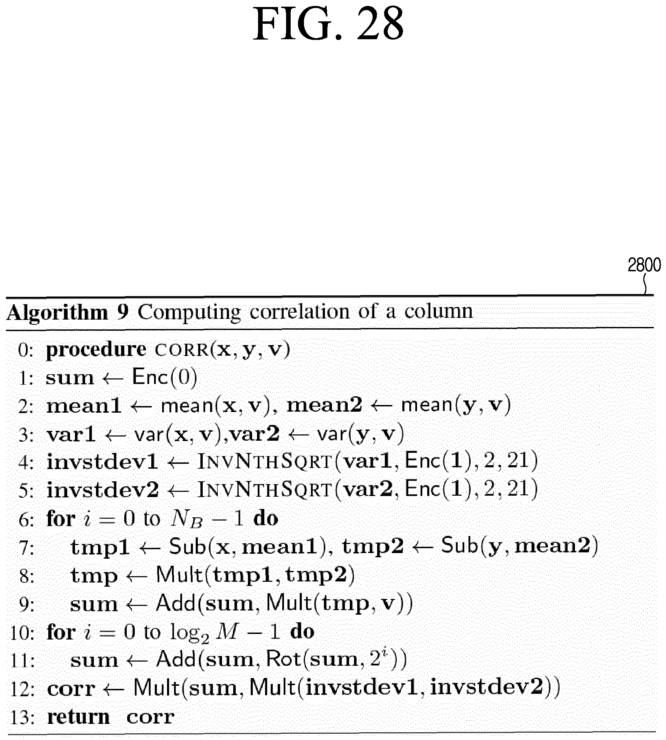

FIG. 28 is a diagram illustrating an algorithm 2800 on a method of calculating a correlation coefficient.

Pearson correlation coefficient between the two features $f_0,f_1$ of the data table may be operated. At this time, operation may be performed only on rows in which the values of the two features are all valid taking into reference the

$$r_{XY} = \frac{\sum (X - \overline{X})(Y - \overline{Y})}{\sqrt{\sum (X - \overline{X})^2}\sqrt{\sum (Y - \overline{Y})^2}}$$

v-bit table. The correlation coefficient formula　　　　　may be used on the two variables X, Y. The algorithm seeking the correlation coefficient of the two features $f_0,f_1$ in the encrypted data table and the encrypted v-bit table in the homomorphic encryption method is as follows. The iteration number of ApproxIn in the operation process may be k2, and the iteration number of ApproxSqtInv may be k1. Likewise, when the value of all slots is ensured to be valid, it may be possible in even operations not using v-bit.

The difficult part in the above-described job is to find a reciprocal number of a number associated with the job. The reason finding the reciprocal number is difficult is that a range of values required in a reverse calculation is to be set, a parameter is to be set so that the result is not diverged in the range, and that approximation algorithm is mainly comprised of repeat algorithm. Accordingly, for the accuracy of the result, the number of repeating times is to be increased, but because calculation costs increase as the number of repeating times increases, an appropriate number of repeating times is to be performed. Because homomorphic ciphertext includes errors, after a certain number of operation times, a rebooting operation is to be performed.

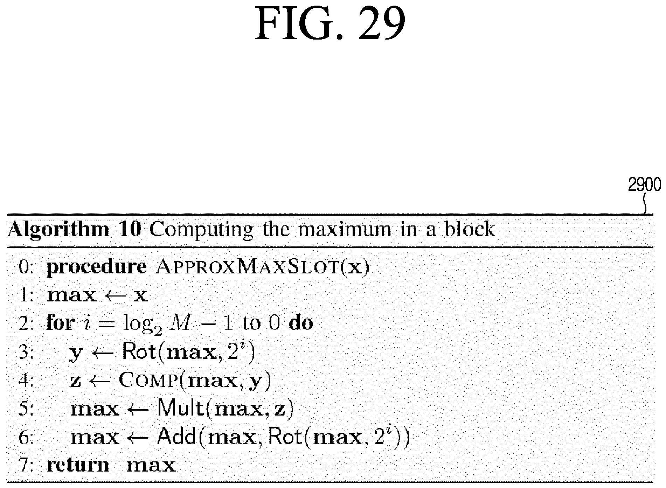

FIG. 29 is a diagram illustrating an operation of calculating a maximum value in a slot according to the disclosure.

Referring to FIG. 29, a relevant algorithm 2900 may store the value of one slot in the homomorphic ciphertext, sequentially compare the stored value with another slot value, and calculate the maximum value. The comparison operation may employ the comparison algorithm illustrated above.

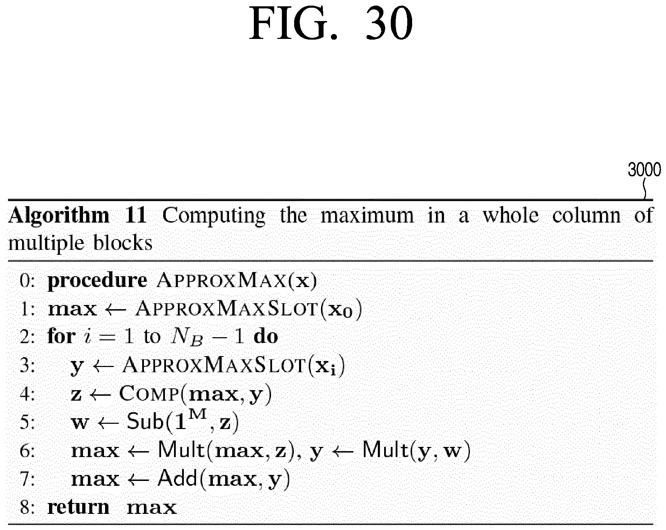

FIG. 30 is a diagram illustrating an operation of calculating a maximum value in several columns in a plurality of blocks.

Referring to FIG. 30, a relevant algorithm 3000 may first calculate a maximum value with the highest value for each block by using the algorithm as in FIG. 29, and calculate the maximum value in the plurality of blocks through a comparison between the calculated maximum values.

In the above, only the operation of calculating the maximum value has been described, but it is also possible to calculate a minimum value through an operation of calculating a small value in the comparison process.

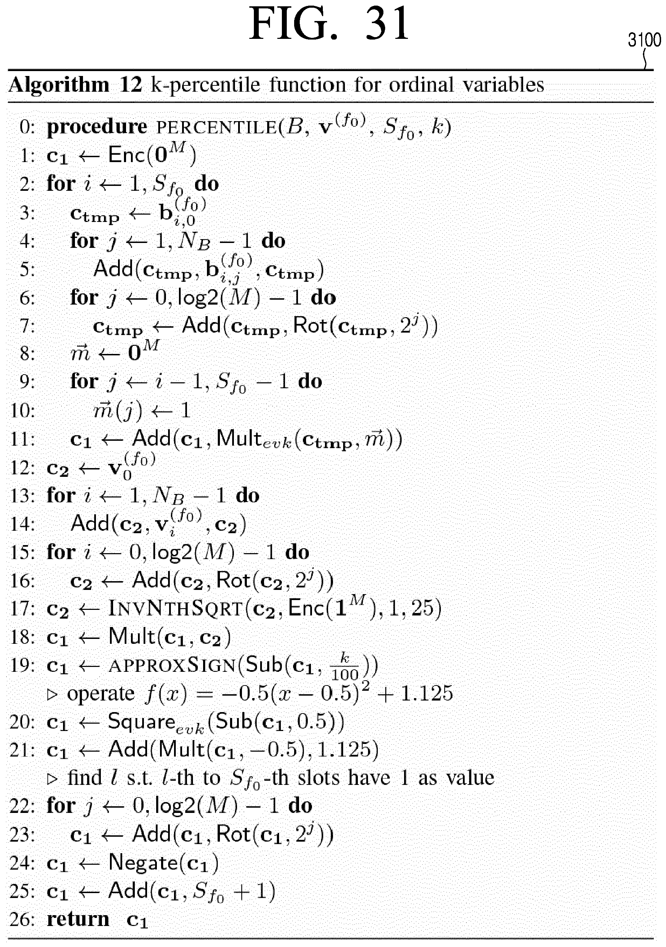

FIG. 31 is a diagram illustrating a method of calculating a value of a specific order according to an embodiment of the disclosure.

Referring to FIG. 31, a percentile algorithm 3100 is similar to the method of arranging data in an ascending order. First, the arrangement process may be performed, and a value corresponding to the percentile requested thereto may be calculated.

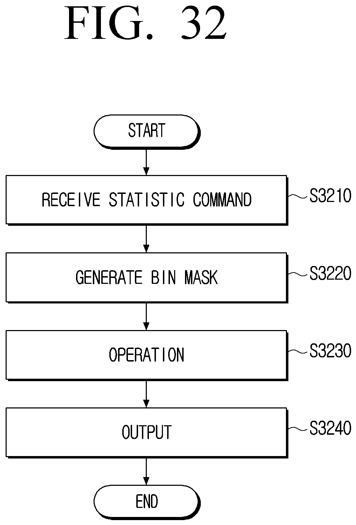

FIG. 32 is a flowchart illustrating a ciphertext processing method according to an embodiment of the disclosure.

Referring to FIG. 32, first the statistic calculation command on the plurality of homomorphic ciphertext may be received (S3210). The statistic calculation command as described above may include calculating the number of variables having a specific value, an average of values satisfying the specific condition, variance, and the like.

Then, the plurality of homomorphic ciphertext may be stored with the encrypted state of the plurality of variable data.

Then, the bin mask having different variable data classified on each of the homomorphic ciphertext may be generated (S3220). The generating of the bin mask as described above may be generated in the generation process of the homomorphic ciphertext as previously described, and may also be generated in the homomorphic ciphertext state. Further, the bin mask may be a bin mask including only one variable data per slot, and may be the expanded bin mask including whether the plurality of variable values is present, the power bin mask previously described, the big bin mask, or the like.

Then, number data corresponding to the variable combination may be generated by using the bin mask (S3230). Specifically, a count value matching a specific condition may be calculated by using the multiplication of the generated bin mask.

Then, the calculated number data may be output. The output as described above may be performed in the encrypted state, the process of decrypting the relevant data may be performed, and may be output as the decrypted result.

Accordingly, the encryption processing method according to an example embodiment may perform an efficient statistical operation on the homomorphic ciphertext. The ciphertext processing method as in FIG. 32 may be executed on the electronic device which includes the configuration of FIG. 2, and may also be executed on electronic devices which include other configurations in addition thereto.

In addition, the ciphertext processing method as described above may be realized with a program including an algorithm executable in a computer, and the above-described program may be stored in a non-transitory computer readable medium and provided.

The non-transitory computer readable medium may refer to a medium that stores data semi-permanently rather than storing data for a very short time, such as a register, a cache, a memory, or the like, and is readable by a device. Specifically, programs for performing the various methods described above may be stored in the non-transitory computer readable medium such as, for example, and without limitation, a compact disc (CD), a digital versatile disc (DVD), a hard disc, a Blu-ray disc, a USB, a memory card, a ROM, and the like, and provided.

In addition, while the disclosure has been shown and described with reference to the example embodiments thereof, the disclosure is not limited to the specific example embodiments described above, and various modifications may be made therein by those skilled in the art to which this disclosure pertains without departing from the spirit and scope of the disclosure, and such modifications shall not be understood as separate from the technical concept or outlook of the present disclosure.

## Claims

1.    An electronic device, comprising:

a memory configured to store at least one instruction, and store homomorphic ciphertexts storing a plurality of variable data in an encrypted state in plurality; and
a processor configured to execute at least one instruction,
wherein the processor is configured to generate, by executing the at least one instruction, number data corresponding to a variable combination by using a bin mask having different variable data classified for each of the homomorphic ciphertexts based on an operation instruction on the plurality of homomorphic ciphertexts being received.

2.    The electronic device of claim 1, wherein the homomorphic ciphertext comprises a plurality of slots, and each of the plurality of slots comprise one variable data.

3.    The electronic device of claim 1, wherein the bin mask comprises a plurality of slots,

wherein each of the plurality of slots comprise data on whether one variable value is present,
wherein the processor is configured to generate a plurality of bin masks for each variable data comprised in the homomorphic ciphertext with respect to each of the homomorphic ciphertexts, select a bin mask corresponding to the variable combination from among the plurality of generated bin masks, and generate number data with the variable combination by using multiplication between the selected bin masks.

4. The electronic device of claim 1, wherein the bin mask comprises a plurality of slots, and

each of the plurality of slots comprise a plurality of sub slots comprising data on whether one variable value is present,
wherein the processor is configured to generate one bin mask on each of the homomorphic ciphertexts, and generate number data with the variable combination by using sub slots in the bin mask which correspond to the variable combination from among the plurality of bin masks.

5. The electronic device of claim 4, wherein the plurality of sub slots is configured to be disposed in one slot with a preset bit distance.

6. The electronic device of claim 1, wherein the processor is configured to join a first homomorphic ciphertext and a second homomorphic ciphertext comprising a plurality of data on a same feature to one homomorphic ciphertext.

7. The electronic device of claim 6, wherein the processor is configured to use a first position data in the first homomorphic ciphertext and a second position data in the second homomorphic ciphertext on common data in the first homomorphic ciphertext and the second homomorphic ciphertext to join the first homomorphic ciphertext and the second homomorphic ciphertext as one.

8. The electronic device of claim 7, wherein the processor is configured to compare, based on data encrypted with a one-direction encryption scheme using a preset common key with respect to each of the plurality of data comprised in the first and second homomorphic ciphertexts and position data in a homomorphic ciphertext on the encrypted data being input, encrypted data on the first homomorphic ciphertext with encrypted data on the second homomorphic ciphertext, and check the first position data and the second position data which comprise common data between the two homomorphic ciphertexts.

9. A method of processing ciphertext on a homomorphic ciphertext, the method comprising:

storing homomorphic ciphertexts, which stores a plurality of variable data in an encrypted state, in plurality, and receiving an operation instruction on the plurality of homomorphic ciphertexts;
generating a bin mask having different variable data classified for each of the plurality of homomorphic ciphertexts;
generating number data corresponding to a variable combination by using the bin mask; and
outputting the generated number data.

10. The method of claim 9, wherein the homomorphic ciphertext comprises a plurality of slots, and each of the plurality of slots comprise one variable data.

11. The method of claim 9, wherein the bin mask comprises a plurality of slots, and each of the plurality of slots comprise data on whether one variable value is present,

wherein the generating the bin mask comprises generating a plurality of bin masks for each variable data comprised in the homomorphic ciphertext with respect to each homomorphic ciphertext,
wherein the generating number data comprises selecting a bin mask corresponding to the variable combination from among the plurality of generated bin masks, and using multiplication between the selected bin masks to generate number data with the variable combination.

12. The method of claim 9, wherein the bin mask comprises a plurality of slots, and each of the plurality of slots comprise a plurality of sub slots comprising data on whether one variable value is present,

wherein the generating the bin mask comprises generating one bin mask with respect to each of the homomorphic ciphertexts, and
wherein the generating number data comprises using sub slots in the bin mask corresponding to the variable combination from among the plurality of bin masks to generate number data with the variable combination.

13. The method of claim 12, wherein the plurality of sub slots is configured to be disposed in one slot with a preset bit distance.

**14.** The method of claim 9, further comprising:
joining a first homomorphic ciphertext and a second homomorphic ciphertext comprising a plurality of data on a same feature to one homomorphic ciphertext.

**15.** The method of claim 14, wherein the joining comprises using a first position data in the first homomorphic ciphertext and a second position data in the second homomorphic ciphertext on common data in the first homomorphic ciphertext and the second homomorphic ciphertext, and joining the first homomorphic ciphertext and the second homomorphic ciphertext as one.

**16.** The method of claim 15, wherein the joining comprises comparing, based on data encrypted with a one-direction encryption scheme using a preset common key with respect to each of the plurality of data comprised in the first and second homomorphic ciphertexts and position data in a homomorphic ciphertext on the encrypted data being input, encrypted data on the first homomorphic ciphertext with encrypted data on the second homomorphic ciphertext, and checking the first position data and the second position data which comprise common data between the two homomorphic ciphertexts.

**17.** A computer readable recording medium comprising a program for executing a ciphertext processing method, the method comprising:

storing homomorphic ciphertexts, which stores a plurality of variable data in an encrypted state, in plurality, and receiving an operation instruction on the plurality of homomorphic ciphertexts;
generating a bin mask having different variable data classified for each of the plurality of homomorphic ciphertexts;
generating number data corresponding to a variable combination by using the bin mask; and
outputting the generated number data.

# FIG. 1

200

FIRST
SERVER DEVICE

$Ct_1$, $Ct_2$     $Ct_1+Ct_2$

10   NETWORK

$Ct_1+Ct_2$   300

SECOND
SERVER DEVICE

$Ct_1$     $Ct_2$

ELECTRONIC
DEVICE 1    ELECTRONIC
DEVICE 2   ...   ELECTRONIC
DEVICE N

100-1     100-2     100-n

# FIG. 2

100

110 — MEMORY

130 — COMMUNICATION DEVICE

120 — PROCESSOR

150 — OPERATION INPUT DEVICE

140 — DISPLAY

# FIG. 3

| A[1,4] | B[1,4] | C[1,2] |
|--------|--------|--------|
| 1 | 2 | 1 |
| 2 | 2 | 2 |
| 3 | 4 | 2 |
| 3 | 3 | 1 |
| 1 | 1 | 1 |
| 2 | 2 | 2 |
| 1 | 1 | 1 |
| 4 | 4 | 1 |

310

320

| (A,B,C) =(1,1,1) | (A,B,C) =(1,2,1) | (A,B,C) =(2,2,2) | (A,B,C) =(3,3,1) | (A,B,C) =(3,4,2) | (A,B,C) =(4,4,1) |
|---|---|---|---|---|---|
| 0 | 1 | 0 | 0 | 0 | 0 |
| 0 | 0 | 1 | 0 | 0 | 0 |
| 0 | 0 | 0 | 0 | 1 | 0 |
| 0 | 0 | 0 | 1 | 0 | 0 |
| 1 | 0 | 0 | 0 | 0 | 0 |
| 0 | 0 | 1 | 0 | 0 | 0 |
| 1 | 0 | 0 | 0 | 0 | 0 |
| 0 | 0 | 0 | 0 | 0 | 1 |

| A | B | C | Count |
|---|---|---|-------|
| 1 | 1 | 1 | 2 |
| 1 | 2 | 1 | 1 |
| 2 | 2 | 2 | 2 |
| 3 | 3 | 1 | 1 |
| 3 | 4 | 2 | 1 |
| 4 | 4 | 1 | 1 |

330

The rest of (A,B,C) cases are zero.

# FIG. 4

410     420     430     440     450     460

| A[1,4] |
|--------|
| 1 |
| 2 |
| 3 |
| 3 |
| 1 |
| 2 |
| 1 |
| 4 |

Ciphertext of A

| A(1) | A(2) | A(3) | A(4) |
|------|------|------|------|
| 1 | 0 | 0 | 0 |
| 0 | 1 | 0 | 0 |
| 0 | 0 | 1 | 0 |
| 0 | 0 | 1 | 0 |
| 1 | 0 | 0 | 0 |
| 0 | 1 | 0 | 0 |
| 1 | 0 | 0 | 0 |
| 0 | 0 | 0 | 1 |

BinMask of A (Ciphertext)

| B[1,4] |
|--------|
| 2 |
| 2 |
| 4 |
| 3 |
| 1 |
| 2 |
| 1 |
| 4 |

Ciphertext of B

| B(1) | B(2) | B(3) | B(4) |
|------|------|------|------|
| 0 | 1 | 0 | 0 |
| 0 | 1 | 0 | 0 |
| 0 | 0 | 0 | 1 |
| 0 | 0 | 1 | 0 |
| 1 | 0 | 0 | 0 |
| 0 | 1 | 0 | 0 |
| 1 | 0 | 0 | 0 |
| 0 | 0 | 0 | 1 |

BinMask of B

| C[1,2] |
|--------|
| 1 |
| 2 |
| 2 |
| 1 |
| 1 |
| 2 |
| 1 |
| 1 |

Ciphertext of C

| C(1) | C(2) |
|------|------|
| 1 | 0 |
| 0 | 1 |
| 0 | 1 |
| 1 | 0 |
| 1 | 0 |
| 0 | 1 |
| 1 | 0 |
| 1 | 0 |

BinMask of C

| A(1) | | B(1) | | C(1) | | (A,B,C)=(1,1,1) |
|------|---|------|---|------|---|-----------------|
| 1 | ⊗ | 0 | ⊗ | 1 | ⇒ | 0 |
| 0 | | 0 | | 0 | | 0 |
| 0 | | 0 | | 0 | | 0 |
| 0 | | 0 | | 1 | | 0 |
| 1 | | 1 | | 1 | | 1 |
| 0 | | 0 | | 0 | | 0 |
| 1 | | 1 | | 1 | | 1 |
| 0 | | 0 | | 1 | | 0 |

471     472     473     480

EP 4 149 045 A1

FIG. 5

POWER BIN MASK

ORIGINAL TEXT

POWER BIN MASK

EP 4 149 045 A1

# FIG. 6

601　　　　　　602　　　　　　　　604　　　　　　605

| A[1,4] |
|--------|
| 1 |
| 2 |
| 3 |
| 3 |
| 1 |
| 2 |
| 1 |
| 4 |

| A[1,4] | | | |
|---|---|---|---|
| 1 | 0 | 0 | 0 |
| 0 | 1 | 0 | 0 |
| 0 | 0 | 1 | 0 |
| 0 | 0 | 1 | 0 |
| 1 | 0 | 0 | 0 |
| 0 | 1 | 0 | 0 |
| 1 | 0 | 0 | 0 |
| 0 | 0 | 0 | 1 |

CIPHERTEXT
OF A

| B[1,4] |
|--------|
| 2 |
| 2 |
| 4 |
| 3 |
| 1 |
| 2 |
| 1 |
| 4 |

| B(1) | B(2) | B(3) | B(4) |
|---|---|---|---|
| 0 | 1 | 0 | 0 |
| 0 | 1 | 0 | 0 |
| 0 | 0 | 0 | 1 |
| 0 | 0 | 1 | 0 |
| 1 | 0 | 0 | 0 |
| 0 | 1 | 0 | 0 |
| 1 | 0 | 0 | 0 |
| 0 | 0 | 0 | 1 |

CIPHERTEXT　　　BINMASK OF B
OF B

603　　　　　　606　　　　　　607

| A[1,4] | | | |
|---|---|---|---|
| 1 | 0 | 0 | 0 |
| 0 | 1 | 0 | 0 |
| 0 | 0 | 1 | 0 |
| 0 | 0 | 1 | 0 |
| 1 | 0 | 0 | 0 |
| 0 | 1 | 0 | 0 |
| 1 | 0 | 0 | 0 |
| 0 | 0 | 0 | 1 |

⊗

| B(1) |
|------|
| 0 |
| 0 |
| 0 |
| 0 |
| 1 |
| 0 |
| 1 |
| 0 |

| A[1,4]*B(1) | | | |
|---|---|---|---|
| 0 | 0 | 0 | 0 |
| 0 | 0 | 0 | 0 |
| 0 | 0 | 0 | 0 |
| 0 | 0 | 0 | 0 |
| 1 | 0 | 0 | 0 |
| 0 | 0 | 0 | 0 |
| 1 | 0 | 0 | 0 |
| 0 | 0 | 0 | 0 |

⇒ FOUR CASES OF (A, B) = (1,1), (2,1), (3,1), (4,1)
  POSSIBLE WITH ONE MULTIPLICATION

EP 4 149 045 A1

# FIG. 7

2) Encrypted Data Joining Protocol

Data owning Company 1 ($D_1$) — 100-1

Data fusion public service (F) — 100-2

The same protocol is executed as that between F and $D_2$

Data owning Company 2 ($D_2$) — 100-3

① $L_1 \leftarrow$ list of (i, HMAC(id)) for every row #i in the data table $T_1$

② $L_1$

③ Generate $UID_1$

④ $UID_1$

⑤ $T'_1 \leftarrow$ Update $T_1$ with the $UID_1$

⑥ $C^{tb}_1 \leftarrow$ Encrypt $T_1$ with $pk_h$

⑦ $C^{tb}_1$

⑧ Combine $C^{tb}_1$ and $C^{tb}_2$ (from $D_2$) to make the joined encrypted table $C_R$.

⑨ Send $C_R$ to the Z

# FIG. 8

| AGE | REGION | CREDIT RATING |
|---|---|---|
| 20S OR LESS | SEOUL | 1 |
| 30S-50S | SEOUL | 2 |
| 60S OR MORE | METROPOLITAN CITY | 2 |
| 30S-50S | PROVINCE | 3 |
| 20S OR LESS | PROVINCE | 2 |
| 60S OR MORE | METROPOLITAN CITY | 3 |
| 30S-50S | SEOUL | 2 |

Encoding ⇨

| AGE | REGION | CREDIT RATING |
|---|---|---|
| 1 | 1 | 1 |
| 2 | 1 | 2 |
| 3 | 2 | 2 |
| 2 | 3 | 3 |
| 1 | 3 | 2 |
| 3 | 2 | 3 |
| 2 | 1 | 2 |

⇩

NUMBER OF PEOPLE 60S OR MORE+ METROPOLITAN CITY→2(Bin count)
AVERAGE CREDIT RATING OF PEOPLE IN SEOUL→1.66(Bin average)
BREAKUP OF CREDIT RATING OF 30S-50S→1.89(Bin variance)

# FIG. 9

900

```
1: procedure GENBINMASK(x, v, f̄, s̄)
2:     n_b ← ⌈n/M⌉
3:     m ← length(f̄)
4:     for i ← 0,m - 1 do
5:         for j ← 0,n_b - 1 do
6:             for k ← 1,s_i do
7:                 tmp ← 0^M
8:                 for l ← 0, M - 1 do
9:                     if x̄_j^(fi)(l) == k & v̄_j^(fi)(l) == 1 then
10:                        tmp[l] ← 1
11:                b_{k,j}^(fi) ← Enc_pk(tmp)
12:     return b
```

# FIG. 10

1000

```
1: procedure GENBINMASK(x, f̄, s̄)
2:      n_b ← ⌈n/M⌉
3:      m ← length(f̄)
4:      for i ← 0,m - 1 do
5:          for j ← 0,n_b - 1 do
6:              for k ← 1,s_i do
7:                  tmp ← 0^M
8:                  for l ← 0, M - 1 do
9:                      if x̄_j^{(fi)}(l) == k then
10:                         tmp[l] ← 1
11:                 b_{k,j}^{(fi)} ← Enc_{pk}(tmp)
12:     return b
```

# FIG. 11

1100

```
procedure DISCRETEEQUALZERO(x, μ, K)
    d ← ⌈log₂ μ⌉
    y ← Mult_evk(x, 1/2^d)

    declare pows[K + 1]                    ▷ array of ciphertexts
    pows[0] ← Enc_pk((1^M)^T)
    pows[1] ← y
    for i ← 2, K do
        pows[i] ← Mult_evk(pows[⌈i/2⌉], pows[⌈i/2⌉])
    s ← Enc_pk((0^M)^T)
    c ← Enc_pk((0^M)^T)
    for i ← 0, K do
        s ← Add(s, mult_evk(a_i, pow[i]))
        c ← Add(s, mult_evk(b_i, pow[i]))
    ▷s≈sinc(x/2^d), c≈cos(πx/2^d)

    s ← Mult_evk(s, c)
    for i ← 0, d do
        c ← Mult_evk(c, c)
        c ← Mult_evk(c, 2)
        c ← Sub(c, 1)
        s ← Mult_evk(s, c)
    return s
```

# FIG. 12

1200

```
1: procedure GENBINMASK(X, V, f̄, s̄)
2:      n_b ← ⌈n/M⌉
3:      m ← length(f̄)
4:      for i ← 0,m - 1 do
5:          for j ← 0,n_b - 1 do
6:              for k ← 1,s_i do
7:                  tmp ← Sub(X_j^(fi),k)
8:                  tmp ← DiscreteEqualZero(tmp,s_i, K)
9:                  if v-bit table exists, then
10:                     tmp ← Mult_evk(tmp, V_j^(fi))
11:                 b_{k,j}^{(fi)} ← tmp
12:     return b
```

# FIG. 13

1300

```
1: procedure BINCOUNT(b, f̄, c̄)
2:     n_b ← ⌈n/M⌉
3:     m ← length(f̄)
4:     sum ← Enc_pk((0^M)^T)
5:     for i ← 0,n_b - 1 do
6:         tmp ← b_{co,i}^{(fo)}
7:         for j ← 1, m - 1 do
8:             tmp ← Mult_evk(tmp, b_{cj,i}^{(fj)})
9:         sum ← Add(sum, tmp)
10:    for i ← 0, log2(M) - 1 do
11:        sum ← Add(sum, Rot_evk(sum, 2^i))
12:    return sum
```

# FIG. 14

1410

| A | B | C | D | E |
|---|---|---|---|---|
| 1 | 1 | 1 | 1 | 1 |
| 4 | 3 | 4 | 1 | 5 |
| 1 | 1 | 1 | 1 | 1 |
| 2 | 4 | 3 | 2 | 4 |
| 5 | 1 | 1 | 1 | 1 |
| 1 | 2 | 3 | 4 | 3 |
| ... | ... | ... | ... | ... |

1420

1430

| A | B | C | D | E | | | | |
|---|---|---|---|---|---|---|---|---|
| | | | | 1 | 2 | 3 | 4 | 5 |
| 1 | 1 | 1 | 1 | | | | | |
| 1 | 1 | 1 | 2 | | | | | |
| 1 | 1 | 1 | 3 | | | | | |
| ... | ... | ... | ... | | | | | |
| 5 | 5 | 5 | 5 | | | | | |

A=1, B=1, C=1, D=1, E=1
NUMBER OF POSSIBLE CASES

# FIG. 15

1510

| A | B | C | D | E |
|---|---|---|---|---|
| 1 | 1 | 1 | 1 | 1 |
| 4 | 3 | 4 | 1 | 5 |
| 1 | 1 | 1 | 1 | 1 |
| 2 | 4 | 3 | 2 | 4 |
| 5 | 1 | 1 | 1 | 1 |
| 1 | 2 | 3 | 4 | 3 |
| ... | ... | ... | ... | ... |

1520

$b_1^{(A)}$

| 1 |
| 0 |
| 1 |
| 0 |
| 0 |
| 1 |
| ... |

$\odot$

$b_1^{(B)}$

| 1 |
| 0 |
| 1 |
| 0 |
| 1 |
| 0 |
| ... |

$\odot$

$b_1^{(C)}$

| 1 |
| 0 |
| 1 |
| 0 |
| 1 |
| 0 |
| ... |

$\odot$

$b_1^{(D)}$

| 1 |
| 1 |
| 1 |
| 0 |
| 1 |
| 0 |
| ... |

$\odot$

$b_1^{(E)}$

| 1 |
| 0 |
| 1 |
| 0 |
| 1 |
| 0 |
| ... |

| 1 |
| 0 |
| 1 |
| 0 |
| 0 |
| 0 |
| ... |

TOTAL OF ALL ROWS=
( A=1, B=1, C=1, D=1, E=1)
NUMBER OF POSSIBLE CASES

$\odot$:Hadamard mult
(row-wise mult)

1530

# FIG. 16

1610

| A | B | C | D | E |
|---|---|---|---|---|
| 1 | 1 | 1 | 1 | 1 |
| 4 | 3 | 4 | 1 | 5 |
| 1 | 1 | 1 | 1 | 1 |
| 2 | 4 | 3 | 2 | 4 |
| 5 | 1 | 1 | 1 | 1 |
| 1 | 2 | 3 | 4 | 3 |
| ... | ... | ... | ... | ... |

1620

$p^{(A)}$ (2)

| | | | | |
|---|---|---|---|---|
| 0 0 0 | 0 0 0 | 0 0 0 | 0 0 0 | 0 0 1 |
| 0 0 0 | 0 0 1 | 0 0 0 | 0 0 0 | 0 0 0 |
| 0 0 0 | 0 0 0 | 0 0 0 | 0 0 0 | 0 0 1 |
| 0 0 0 | 0 0 0 | 0 0 0 | 0 0 1 | 0 0 0 |
| 0 0 1 | 0 0 0 | 0 0 0 | 0 0 0 | 0 0 0 |
| 0 0 0 | 0 0 0 | 0 0 0 | 0 0 0 | 0 0 1 |

...

⊙

1630

$b_1^{(B)}$ ⊙ $b_1^{(C)}$ ⊙ $b_1^{(D)}$ ⊙ $b_1^{(E)}$

| $b_1^{(B)}$ | $b_1^{(C)}$ | $b_1^{(D)}$ | $b_1^{(E)}$ |
|---|---|---|---|
| 1 | 1 | 1 | 1 |
| 0 | 0 | 1 | 0 |
| 1 | 1 | 1 | 1 |
| 0 | 0 | 0 | 0 |
| 1 | 1 | 1 | 1 |
| 0 | 0 | 0 | 0 |
| ... | ... | ... | ... |

(2)

| | | | | |
|---|---|---|---|---|
| 0 0 0 | 0 0 0 | 0 0 0 | 0 0 0 | 0 0 1 |
| 0 0 0 | 0 0 0 | 0 0 0 | 0 0 0 | 0 0 0 |
| 0 0 0 | 0 0 0 | 0 0 0 | 0 0 0 | 0 0 1 |
| 0 0 0 | 0 0 0 | 0 0 0 | 0 0 0 | 0 0 0 |
| 0 0 1 | 0 0 0 | 0 0 0 | 0 0 0 | 0 0 0 |
| 0 0 0 | 0 0 0 | 0 0 0 | 0 0 0 | 0 0 0 |

...

1640

(EXAMPLE) TOTAL OF SIX ROWS

| 0 0 1 | 0 0 0 | 0 0 0 | 0 0 0 | 0 1 0 |

NUMBER OF POSSIBLE CASES OF (A=5, B=1, C=1, D=1, E=1): $001_{(2)} = 1$

NUMBER OF POSSIBLE CASES OF (A=1, B=1, C=1, D=1, E=1): $010_{(2)} = 2$

# FIG. 17

1710

| A | B | C | D | E |
|---|---|---|---|---|
| 1 | 1 | 1 | 1 | 1 |
| 4 | 3 | 4 | 1 | 5 |
| 1 | 1 | 1 | 1 | 1 |
| 2 | 4 | 3 | 2 | 4 |
| 5 | 1 | 1 | 1 | 1 |
| 1 | 2 | 3 | 4 | 3 |
| ... | ... | ... | ... | ... |

① EXPRESS EXISTING FOUR BIN FEATURES AS TWO BIN FEATURES

| BigBin1 | BigBin2 |
|---------|---------|
| 1 | 1 |
| 14 | 5 |
| 1 | 1 |
| 18 | 9 |
| 1 | 1 |
| 8 | 18 |
| ... | ... |

1720

1730

| $p^{(A)}$ |
|-----------|
| 0 0 0 ┊ 0 0 0 ┊ 0 0 0 ┊ 0 0 0 ┊ 0 0 1 |
| 0 0 0 ┊ 0 0 1 ┊ 0 0 0 ┊ 0 0 0 ┊ 0 0 0 |
| 0 0 0 ┊ 0 0 0 ┊ 0 0 0 ┊ 0 0 0 ┊ 0 0 1 |
| 0 0 0 ┊ 0 0 0 ┊ 0 0 0 ┊ 0 0 1 ┊ 0 0 0 |
| 0 0 1 ┊ 0 0 0 ┊ 0 0 0 ┊ 0 0 0 ┊ 0 0 0 |
| 0 0 0 ┊ 0 0 0 ┊ 0 0 0 ┊ 0 0 0 ┊ 0 0 1 |
| ... |

$\odot$

② GENERATE BIGBINMASK1, BIGBINMASK2 CORRESPONDING TO EACH OF BIGBIN1, BIGBIN2

1740

| $q_1^{(B,C,D,E)}$ |
|-------------------|
| $2^A$ |
| 0 |
| $2^A$ |
| 0 |
| $2^A$ |
| 0 |
| ... |

$\odot$

1750

| $r_9^{(B,C,D,E)}$ |
|-------------------|
| 0 |
| 0 |
| 0 |
| $2^A$ |
| 0 |
| 0 |
| ... |

③ MULTIPLY BETWEEN POWERBINMASK, BIGBINMASK 1, BIGBINMASK2

EP 4 149 045 A1

# FIG. 18

1800

```
1: procedure GENPOWERBINMASK(x, v, fo)
2:     n_b ← ⌈n/M⌉
3:     for i ← 0, n_b - 1 do
4:         p̄ ← (0^M)^T
5:         for j ← 0, M - 1 do
6:             if v̄^(fo)(i * M + j) == 1 then
7:                 p̄(j) ← Pow(2, Δ · (x̄^(fo)(i * M + j) - 1) + δ )
8:         p_i ← Enc_sk(p̄)
9:     return p
```

# FIG. 19

1900

```
1:  procedure GENBIGBINMASK(x, v, (f₁,...f_{m-1}),,(s₁,...s_{m-1}))
2:      n_b ← ⌈n/M⌉
3:      Q ← ⌈√(Π_{i=1}^{m-1} (s_i))⌉
4:      for i ← 0, n_b - 1 do
5:          q⃗^(1),...q⃗^(Q) ← (0^M)^T
6:          r⃗^(1),...r⃗^(Q) ← (0^M)^T
7:          for j ← 0, M - 1 do
8:              if v⃗_i^(fl)(j) == 1 for l = 0, 1,...m - 1 then
9:                                          ▷ if every valid bits are one,
10:                 tmp ← 0
11:                 for l ← 0, m - 1 do
12:                     tmp ← s_l * tmp + (x⃗'_i^(fl)(j) - 1)
13:                 q' ← ⌊tmp/Q⌋ + 1
14:                 r' ← tmp%Q + 1
15:                 q⃗^(q')(j) ← 2^
16:                 r⃗^(r')(j) ← 2^
17:         for j ← 1, Q do
18:             q_i^(j) ← Enc_pk(q⃗^(j))
19:             r_i^(j) ← Enc_pk(r⃗^(j))
20:     return q^(i), r^(i) (i = 1, 2...Q)
```

# FIG. 20

In parallel

2010          2020          2030          2040

GPU 0         GPU 1         GPU 2         GPU 3

Block 0       Block 1       Block 2       Block 3

Block 4       Block 5       Block 6       Block 7

.
.
.

# FIG. 21

2100

```
1: procedure MULTPERGPU(p, q, r, curr_gpu_idx, N_g)
2:     l = current_gpu_idx
3:     while l < ⌈n/M⌉ do
4:         a ← 0
5:         while a < Q do
6:             for i ← 1,c do
7:                 q_l^(a+i) ← Mult_evk(p_l, q_l^(a+i))
8:                 b ← 0
9:                 while b < Q do
10:                    for j ← 1, c do
11:                        tmp ← Mult_evk(q_l^(a+i), r_l^(b+j))
12:                        if l ==current_gpu_idx then
13:                            res_current_gpu_idx^(a+i, b+j) ←tmp
14:                        else
15:                            res_current_gpu_idx^(a+i, b+j) ←Add(tmp, res_current_gpu_idx^(a+i, b+j))
16:                    b ← b + c
17:             a ← a + c
18:         l ← l + N_g
19:     return {res_current_gpu_idx^(i,j)| i, j = 1, 2,...Q}
20:
21: procedure LARGEBINCOUNTMULT(p, q, r, N_g)
22:     mres ← {}
23:     for curr_gqu_idx ← 0, N_g - 1 do                    ▷ in parallel
24:         mres ← mres ∪ MULTPERGPU(p, q, r, curr_gpu_idx, N_g)
25:     return mres = {res_k^(i,j)| k = 0, 1,...N_g - 1, i, j = 1, 2,...Q}
```

# FIG. 22

2200

```
 1: procedure LARGEBINCOUNTDEC(mres)
 2:     arr ← zeros((Q², s₀))       ▷ an (Q² * s₀)-size array filled with zeros
 3:     for i ← 1, Q do
 4:         for j ← 1, Q do
 5:             for k ← 0, N_g - 1 do
 6:                 res⃗ ← Dec_sk(res_k^(i,j))
 7:                 for s ← 0, M - 1 do
 8:                     tmp ← res⃗(s)
 9:                     tmp ← tmp/(2 · ∧ + δ)
10:                     for l ← 1, s₀ do
11:                         cnt ← tmp%(1 ≪ Δ)
12:                         arr[Q * (i-1) + (j-1)][l-1] += cnt
13:                         tmp ← tmp/(1 ≪ Δ)
14:     return arr
```

# FIG. 23

# FIG. 24

modulus bits

$\Delta$ $\Delta$ $\delta$        $2\Delta$

$p(k) \cdot q^{(j)}(k) \cdot r^{(l)}(k)$

$\cdots$

$i = s_0$

$i = 2$    $i = 1$

error

$\Delta$ $\Delta$ $\delta$        $2\Delta$

Sum of
$p(k) \cdot q^{(j)}(k) \cdot r^{(l)}(k)$
$(j, l : fixed)$

$\cdots$

$i = s_0$

$i = 2$   $i = 1$

error

# FIG. 25

2500

**Algorithm 1** $\text{COMP}(\mathbf{x}_1, \mathbf{x}_2, iter)$

**Require:** $\mathbf{x}_1(k)$, $\mathbf{x}_2(k) \in [0, 1]$ for every $k \in [0, M-1]$
**Ensure:** $\mathbf{y}$ where $\mathbf{y}(k)$ is an approximation of 1 if $\mathbf{x}_1(k) > \mathbf{x}_2(k)$,
  0 if $\mathbf{x}_1(k) < \mathbf{x}_2(k)$, and $1/2$ otherwise ($k \in [0, M-1]$).
  0: **procedure** $\text{COMP}(\mathbf{x}_1, \mathbf{x}_2, iter)$
  1: $\mathbf{x} \leftarrow \mathbf{x}_1 - \mathbf{x}_2$, $i \leftarrow 0$
  2: **while** $i < iter$ **do**
  3:   $\mathbf{x} \leftarrow f(\mathbf{x})$, $i \leftarrow i + 1$
  4: **return** $(\mathbf{x} + 1)/2$

# FIG. 26

2600

**Algorithm 7** Computing the mean of a column

0: **procedure** MEAN($\mathbf{x}, \mathbf{v}$)
1: $\mathbf{sum} \leftarrow \mathsf{Enc}(0)$
2: $\mathbf{n} \leftarrow \mathsf{Enc}(0)$
3: **for** $i = 0$ to $N_B - 1$ **do**
4:     $\mathbf{sum} \leftarrow \mathsf{Add}(\mathbf{sum}, \mathsf{Mult}(\mathbf{x_i}, \mathbf{v_i}))$
5:     $\mathbf{n} \leftarrow \mathsf{Add}(\mathbf{n}, \mathbf{v_i})$
6: **for** $i = 0$ to $\log_2 M - 1$ **do**
7:     $\mathbf{sum} \leftarrow \mathsf{Add}(\mathbf{sum}, \mathsf{Rot}(\mathbf{sum}, 2^i))$
8:     $\mathbf{n} \leftarrow \mathsf{Add}(\mathbf{n}, \mathsf{Rot}(\mathbf{n}, 2^i))$
9: $\mathbf{invn} \leftarrow \mathsf{INVNTHSQRT}(\mathbf{n}, \mathsf{Enc}(\mathbf{1}^{\mathrm{M}}), 1, 25)$
10: $\mathbf{mean} \leftarrow \mathsf{Mult}(\mathbf{invn}, \mathbf{sum})$
11: **return** mean

# FIG. 27

2700

---

**Algorithm 8** Computing variance of a column

---

0: **procedure** VAR($\mathbf{x}, \mathbf{v}$)
1: $\mathbf{sum} \leftarrow \mathsf{Enc}(0)$
2: $\mathbf{n} \leftarrow \mathsf{Enc}(0)$
2:    $\mathbf{mean} \leftarrow \mathsf{mean}(\mathbf{x}, \mathbf{v})$
3: **for** $i = 0$ to $N_B - 1$ **do**
4:    $\mathbf{tmp} \leftarrow \mathsf{Sub}(\mathbf{x}, \mathbf{mean})$
5:    $\mathbf{tmp} \leftarrow \mathsf{Mult}(\mathbf{tmp}, \mathbf{tmp})$
6:    $\mathbf{sum} \leftarrow \mathsf{Add}(\mathbf{sum}, \mathsf{Mult}(\mathbf{tmp}, \mathbf{v}))$
7:    $\mathbf{n} \leftarrow \mathsf{Add}(\mathbf{n}, \mathbf{v_i})$
8: **for** $i = 0$ to $\log_2 M - 1$ **do**
9:    $\mathbf{sum} \leftarrow \mathsf{Add}(\mathbf{sum}, \mathsf{Rot}(\mathbf{sum}, 2^i))$
10:    $\mathbf{n} \leftarrow \mathsf{Add}(\mathbf{n}, \mathsf{Rot}(\mathbf{n}, 2^i))$
11: $\mathbf{invn} \leftarrow \textsc{InvNthSqrt}(\mathbf{n}, \mathsf{Enc}(\mathbf{1^M}), 1, 25)$
12: $\mathbf{var} \leftarrow \mathsf{Mult}(\mathbf{invn}, \mathbf{sum})$
13: **return** var

---

# FIG. 28

2800

**Algorithm 9** Computing correlation of a column

0: **procedure** CORR($\mathbf{x}, \mathbf{y}, \mathbf{v}$)
1: **sum** $\leftarrow$ Enc(0)
2: **mean1** $\leftarrow$ mean($\mathbf{x}, \mathbf{v}$), **mean2** $\leftarrow$ mean($\mathbf{y}, \mathbf{v}$)
3: **var1** $\leftarrow$ var($\mathbf{x}, \mathbf{v}$),**var2** $\leftarrow$ var($\mathbf{y}, \mathbf{v}$)
4: **invstdev1** $\leftarrow$ INVNTHSQRT(**var1**, Enc(1), 2, 21)
5: **invstdev2** $\leftarrow$ INVNTHSQRT(**var2**, Enc(1), 2, 21)
6: **for** $i = 0$ to $N_B - 1$ **do**
7:     **tmp1** $\leftarrow$ Sub($\mathbf{x}, \mathbf{mean1}$), **tmp2** $\leftarrow$ Sub($\mathbf{y}, \mathbf{mean2}$)
8:     **tmp** $\leftarrow$ Mult(**tmp1**, **tmp2**)
9:     **sum** $\leftarrow$ Add(**sum**, Mult(**tmp**, $\mathbf{v}$))
10: **for** $i = 0$ to $\log_2 M - 1$ **do**
11:     **sum** $\leftarrow$ Add(**sum**, Rot(**sum**, $2^i$))
12: **corr** $\leftarrow$ Mult(**sum**, Mult(**invstdev1**, **invstdev2**))
13: **return** **corr**

# FIG. 29

2900

**Algorithm 10** Computing the maximum in a block

0: **procedure** APPROXMAXSLOT($\mathbf{x}$)
1: $\mathbf{max} \leftarrow \mathbf{x}$
2: **for** $i = \log_2 M - 1$ to $0$ **do**
3: $\quad \mathbf{y} \leftarrow \mathsf{Rot}(\mathbf{max}, 2^i)$
4: $\quad \mathbf{z} \leftarrow \mathrm{COMP}(\mathbf{max}, \mathbf{y})$
5: $\quad \mathbf{max} \leftarrow \mathsf{Mult}(\mathbf{max}, \mathbf{z})$
6: $\quad \mathbf{max} \leftarrow \mathsf{Add}(\mathbf{max}, \mathsf{Rot}(\mathbf{max}, 2^i))$
7: **return** $\mathbf{max}$

# FIG. 30

3000

**Algorithm 11** Computing the maximum in a whole column of multiple blocks

0: **procedure** APPROXMAX($\mathbf{x}$)
1:  **max** $\leftarrow$ APPROXMAXSLOT($\mathbf{x_0}$)
2: **for** $i = 1$ to $N_B - 1$ **do**
3:    $\mathbf{y} \leftarrow$ APPROXMAXSLOT($\mathbf{x_i}$)
4:    $\mathbf{z} \leftarrow$ COMP($\mathbf{max}, \mathbf{y}$)
5:    $\mathbf{w} \leftarrow$ Sub($\mathbf{1^M}, \mathbf{z}$)
6:    **max** $\leftarrow$ Mult($\mathbf{max}, \mathbf{z}$), $\mathbf{y} \leftarrow$ Mult($\mathbf{y}, \mathbf{w}$)
7:    **max** $\leftarrow$ Add($\mathbf{max}, \mathbf{y}$)
8: **return** **max**

# FIG. 31

3100

**Algorithm 12** k-percentile function for ordinal variables

0: **procedure** PERCENTILE($B$, $\mathbf{v}^{(f_0)}$, $S_{f_0}$, $k$)
1: $\mathbf{c_1} \leftarrow \mathsf{Enc}(\mathbf{0}^M)$
2: **for** $i \leftarrow 1, S_{f_0}$ **do**
3:    $\mathbf{c_{tmp}} \leftarrow \mathbf{b}_{i,0}^{(f_0)}$
4:    **for** $j \leftarrow 1, N_B - 1$ **do**
5:      $\mathsf{Add}(\mathbf{c_{tmp}}, \mathbf{b}_{i,j}^{(f_0)}, \mathbf{c_{tmp}})$
6:    **for** $j \leftarrow 0, \log2(M) - 1$ **do**
7:      $\mathbf{c_{tmp}} \leftarrow \mathsf{Add}(\mathbf{c_{tmp}}, \mathsf{Rot}(\mathbf{c_{tmp}}, 2^j))$
8:    $\vec{m} \leftarrow \mathbf{0}^M$
9:    **for** $j \leftarrow i - 1, S_{f_0} - 1$ **do**
10:      $\vec{m}(j) \leftarrow 1$
11:    $\mathbf{c_1} \leftarrow \mathsf{Add}(\mathbf{c_1}, \mathsf{Mult}_{evk}(\mathbf{c_{tmp}}, \vec{m}))$
12: $\mathbf{c_2} \leftarrow \mathbf{v}_0^{(f_0)}$
13: **for** $i \leftarrow 1, N_B - 1$ **do**
14:    $\mathsf{Add}(\mathbf{c_2}, \mathbf{v}_i^{(f_0)}, \mathbf{c_2})$
15: **for** $i \leftarrow 0, \log2(M) - 1$ **do**
16:    $\mathbf{c_2} \leftarrow \mathsf{Add}(\mathbf{c_2}, \mathsf{Rot}(\mathbf{c_2}, 2^j))$
17: $\mathbf{c_2} \leftarrow \text{INVNTHSQRT}(\mathbf{c_2}, \mathsf{Enc}(\mathbf{1}^M), 1, 25)$
18: $\mathbf{c_1} \leftarrow \mathsf{Mult}(\mathbf{c_1}, \mathbf{c_2})$
19: $\mathbf{c_1} \leftarrow \text{APPROXSIGN}(\mathsf{Sub}(\mathbf{c_1}, \frac{k}{100}))$
   $\triangleright$ operate $f(x) = -0.5(x - 0.5)^2 + 1.125$
20: $\mathbf{c_1} \leftarrow \mathsf{Square}_{evk}(\mathsf{Sub}(\mathbf{c_1}, 0.5))$
21: $\mathbf{c_1} \leftarrow \mathsf{Add}(\mathsf{Mult}(\mathbf{c_1}, -0.5), 1.125)$
   $\triangleright$ find $l$ s.t. $l$-th to $S_{f_0}$-th slots have 1 as value
22: **for** $j \leftarrow 0, \log2(M) - 1$ **do**
23:    $\mathbf{c_1} \leftarrow \mathsf{Add}(\mathbf{c_1}, \mathsf{Rot}(\mathbf{c_1}, 2^j))$
24: $\mathbf{c_1} \leftarrow \mathsf{Negate}(\mathbf{c_1})$
25: $\mathbf{c_1} \leftarrow \mathsf{Add}(\mathbf{c_1}, S_{f_0} + 1)$
26: **return** $\mathbf{c_1}$

# FIG. 32

```
        ┌─────────────┐
        │    START    │
        └──────┬──────┘
               │
               ▼
   ┌─────────────────────────────┐
   │ RECEIVE STATISTIC COMMAND   │──── S3210
   └──────────────┬──────────────┘
                  │
                  ▼
   ┌─────────────────────────────┐
   │      GENERATE BIN MASK       │──── S3220
   └──────────────┬──────────────┘
                  │
                  ▼
   ┌─────────────────────────────┐
   │         OPERATION            │──── S3230
   └──────────────┬──────────────┘
                  │
                  ▼
   ┌─────────────────────────────┐
   │          OUTPUT              │──── S3240
   └──────────────┬──────────────┘
                  │
                  ▼
        ┌─────────────┐
        │     END     │
        └─────────────┘
```

## INTERNATIONAL SEARCH REPORT

| International application No. |
| --- |
| **PCT/KR2021/007517** |

**A. CLASSIFICATION OF SUBJECT MATTER**

**H04L 9/00**(2006.01)i

According to International Patent Classification (IPC) or to both national classification and IPC

**B. FIELDS SEARCHED**

Minimum documentation searched (classification system followed by classification symbols)

H04L 9/00(2006.01); H04L 29/08(2006.01); H04L 9/06(2006.01); H04L 9/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동형 암호문(homomorphic encryption), 변수 정보(variable information), 빈 마스크(blank mask), 변수 조합(variable combination), 개수 정보(count information)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-1965628 B1 (SEOUL NATIONAL UNIVERSITY R&DB FOUNDATION) 04 April 2019 (2019-04-04)<br>See paragraphs [0119]-[0120] and [0131]; and figures 4 and 8. | 1-17 |
| A | KR 10-2019-0117286 A (SEOUL NATIONAL UNIVERSITY R&DB FOUNDATION et al.) 16 October 2019 (2019-10-16)<br>See claims 2 and 5. | 1-17 |
| A | 서경진 등. 완전동형암호로 암호화된 데이터에 적합한 산술 가산기의 구현 및 성능향상에 관한 연구. 한국정보보호학회, 정보보호학회논문지. 27(3), pp. 413-426, June 2017 (SEO, Kyongjin et al. Implementation and Performance Enhancement of Arithmetic Adder for Fully Homomorphic Encrypted Data. Journal of The Korea Institute of Information Security & Cryptology.).<br>See section 3. | 1-17 |
| A | US 2017-0180115 A1 (MICROSOFT TECHNOLOGY LICENSING, LLC) 22 June 2017 (2017-06-22)<br>See paragraphs [0043]-[0049]; and figure 3. | 1-17 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 September 2021** | **23 September 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2021/007517** |

### C. DOCUMENTS CONSIDERED TO BE RELEVANT

| Category* | Citation of document, with indication, where appropriate, of the relevant passages | Relevant to claim No. |
|---|---|---|
| A | KR 10-2015-0122494 A (SAMSUNG ELECTRONICS CO., LTD.) 02 November 2015 (2015-11-02) See paragraphs [0076]-[0081]; and figure 11. | 1-17 |

Form PCT/ISA/210 (second sheet) (July 2019)

**INTERNATIONAL SEARCH REPORT**
Information on patent family members

International application No.

**PCT/KR2021/007517**

| Patent document cited in search report | | | Publication date (day/month/year) | Patent family member(s) | | | Publication date (day/month/year) |
|---|---|---|---|---|---|---|---|
| KR | 10-1965628 | B1 | 04 April 2019 | CN | 110214433 | A | 06 September 2019 |
| | | | | EP | 3553995 | A1 | 16 October 2019 |
| | | | | EP | 3553995 | A4 | 13 May 2020 |
| | | | | EP | 3553995 | B1 | 23 June 2021 |
| | | | | EP | 3793127 | A1 | 17 March 2021 |
| | | | | JP | 2020-528232 | A | 17 September 2020 |
| | | | | KR | 10-2040106 | B1 | 27 November 2019 |
| | | | | SG | 11202001984 | SA | 29 April 2020 |
| | | | | US | 10778409 | B2 | 15 September 2020 |
| | | | | US | 2019-0363871 | A1 | 28 November 2019 |
| | | | | US | 2020-0162235 | A1 | 21 May 2020 |
| | | | | US | 2020-0252199 | A1 | 06 August 2020 |
| | | | | WO | 2019-117694 | A1 | 20 June 2019 |
| KR | 10-2019-0117286 | A | 16 October 2019 | EP | 3780480 | A1 | 17 February 2021 |
| | | | | US | 2019-0312719 | A1 | 10 October 2019 |
| | | | | WO | 2019-194403 | A1 | 10 October 2019 |
| US | 2017-0180115 | A1 | 22 June 2017 | US | 9900147 | B2 | 20 February 2018 |
| KR | 10-2015-0122494 | A | 02 November 2015 | US | 2015-0312029 | A1 | 29 October 2015 |
| | | | | US | 9866372 | B2 | 09 January 2018 |

Form PCT/ISA/210 (patent family annex) (July 2019)